(19) Europäisches Patentamt
European Patent Office
Office européen des brevets

(11) EP 1 652 313 B1

## (12) EUROPEAN PATENT SPECIFICATION

(45) Date of publication and mention
of the grant of the patent:
**16.01.2008 Bulletin 2008/03**

(21) Application number: **04777618.2**

(22) Date of filing: **06.07.2004**

(51) Int Cl.:
***H04B 1/40*** *(2006.01)*

(86) International application number:
**PCT/US2004/021616**

(87) International publication number:
**WO 2005/011138 (03.02.2005 Gazette 2005/05)**

(54) **Wireless speech and data transmission**

Drahtlose sprach- und Datenübertragung

Transmission de données et de discours sans fil

(84) Designated Contracting States:
**AT BE BG CH CY CZ DE DK EE ES FI FR GB GR
HU IE IT LI LU MC NL PL PT RO SE SI SK TR**

(30) Priority: **15.07.2003 US 620896**

(43) Date of publication of application:
**03.05.2006 Bulletin 2006/18**

(73) Proprietor: **QUALCOMM INCORPORATED
San Diego, California 92121 (US)**

(72) Inventor: **BALLANTYNE, Gary J.
Christchurch, 8008 (NZ)**

(74) Representative: **Heselberger, Johannes
Patent- und Rechtsanwälte
Bardehle - Pagenberg - Dost
Altenburg - Geissler
Galileiplatz 1
81679 München (DE)**

(56) References cited:
**EP-A- 0 692 918          US-A1- 2002 072 397**

**Description**

**TECHNICAL FIELD**

The disclosure relates to wireless communication and, more particularly, techniques for transmission of voice and data in a wireless communication system.

**BACKGROUND**

Emerging wireless communication standards, such as the CDMA2000 1xEV-DO standard, a third-generation (3G) wireless technology optimized for data, are capable of supporting simultaneous voice and data transmission at different carrier frequencies. For example, a user may send and receive both voice and data from a wireless communication device, such as a mobile telephone handset. To accommodate simultaneous voice and data transmission, some mobile wireless communication devices may be designed to incorporate dual transmitters, one for voice calls and one for data calls. However, dual transmitters add significant cost, complexity, and size to the wireless communication device, requiring duplication of substantial portions of the transmitter chain and air interface.

From the EP 0 692 918 A2 a system and method for cellular digital packet data voice channel selection is known. This document describes a combiner network assembly that combines a transmit data signal with a combined voice and setup signal, to produce a combined voice, setup and data signal that is amplified for transmission.

**SUMMARY**

This disclosure is directed to techniques for voice and data transmission from a wireless communication device, such as a mobile telephone handset. In accordance with the disclosure, a wireless communication device provides a hybrid coupler and control circuitry that permit voice and data calls processed over separate transmitter output branches to be combined for transmission over a common air interface.

When increased transmit power is required, the wireless communication device prioritizes the voice call over the data call. In this case, the voice call is sent over both the voice output branch and the data output branch, taking advantage of the power amplifier in each output branch to achieve a greater overall transmit power. Hence, the wireless communication device independently and simultaneously handles data and voice calls under ordinary circumstances, but drops the data call and combines the voice and data output branches for voice transmission when increased transmit power is required for the voice transmission.

In one example, the disclosure provides a power amplifier module comprising a first amplifier to amplify a voice call for transmission over a first output branch, a second amplifier to amplify a data call for transmission over a second output branch, a phase shifter to generate a phase-shifted version of the voice call, and a switch to decouple the data call from the second amplifier and couple the phase-shifted version of the voice call to the second amplifier when required transmit power for the voice call exceeds the threshold.

In another example, the disclosure provides a power amplifier module comprising a first amplifier to amplify a voice call for transmission over a first output branch, a second amplifier to amplify a data call for transmission over a second output branch, a coupler circuit to combine the first and second output branches for transmission over a wireless interface associated with a mobile wireless communication device, and means for coupling a phase-shifted version of the voice call to the second amplifier when required transmit power for the voice call exceeds a threshold.

In an added example, the disclosure provides a power amplifier/antenna module comprising a first amplifier to amplify a voice call for transmission over a first output branch, a second amplifier to amplify a data call for transmission over a second output branch, a radio frequency antenna for a wireless interface associated with a mobile wireless communication device, and a coupler circuit to combine the first and second output branches for transmission over the antenna.

In a further example, the disclosure provides a method comprising transmitting a voice call via a first output branch, transmitting a data call via a second output branch, combining the first and second output branches for transmission over a wireless interface associated with a mobile wireless communication device, and transmitting the voice call via both the first and second output branches when a required transmit power for the voice call exceeds a threshold.

In another example, the disclosure provides a mobile wireless communication device comprising a first output branch for transmission of a voice call, and a second output branch for transmission of a data call; transmitting a data call via a second output branch. A coupler circuit combines the first and second output branches for transmission over a wireless interface associated with a mobile wireless communication device. A power control unit directs transmission of the voice call via both the first and second output branches when required transmit power for the voice call exceeds a threshold.

In an added example, the disclosure provides a method comprising transmitting a voice call at a first transmit frequency via a first output branch, transmitting a data call at a second transmit frequency via a second output branch, controlling a transmit power of a voice call in response to power control data, and dropping the data call and transmitting the voice call via both the first and second output branches at the first transmit frequency when the transmit power of the voice call exceeds a threshold.

In another example, the disclosure provides a power amplifier module comprising a first amplifier to amplify a voice call for transmission over a first output branch, a second amplifier to amplify a data call for transmission over a second output branch, a first hybrid coupler to pass the voice call to the first amplifier and generate a phase-shifted version of the voice call, a switch device to couple the phase-shifted version of the voice call to the second amplifier, and decouple the data call from the second amplifier when required transmit power for the voice call exceeds a threshold, and a second hybrid coupler to combine the first and second output branches for transmission over a wireless interface associated with a mobile wireless communication device.

In a further example, the disclosure provides a mobile wireless communication device comprising a first output branch for transmission of a voice call at a first transmit frequency, and a second output branch for transmission of a data call at a second transmit frequency. A power control unit controls a transmit power of a voice call in response to power control data. The power control unit drops the data call and directs transmission of the voice call via both the first and second output branches at the first transmit frequency when the transmit power of the voice call exceeds a threshold.

The voice calls sent over the first and second output branches may occupy the same frequency range, but be phase-shifted relative to one another. A phase shifter may be provided to phase-shift the voice call sent over the second output branch by approximately 90 degrees. A 90-degree hybrid coupler circuit additively combines the voice call and the phase-shift voice call transmitted over the first and second output branches, respectively, to produce a voice call with greatly increased transmit power for more reliable voice communication.

The details of one or more examples are set forth in the accompanying drawings and the description below. Other features, objects, and advantages will be apparent from the description and drawings, and from the claims.

## BRIEF DESCRIPTION OF DRAWINGS

FIG. 1 is a block diagram illustrating a wireless communication device capable of combining dual transmitter output branches for high power voice transmission.

FIG 2 is a block diagram illustrating an alternative wireless communication device capable of combining dual transmitter output branches for high power voice transmission.

FIG 3 is another block diagram illustrating an alternative wireless communication device capable of combining dual transmitter output branches for high power voice transmission.

FIG. 4 is a block diagram illustrating another alternative wireless communication device capable of combining dual transmitter output branches for high power voice transmission.

FIG. 5 is a block diagram illustrating another alternative wireless communication device capable of combining dual transmitter output branches for high power voice transmission.

FIG 6 is a circuit diagram illustrating an exemplary hybrid coupler circuit for use with any of the examples illustrated in FIGS. 1-5.

FIG 7 is a flow diagram illustrating a method for combining dual transmitter output branches for high power voice transmission.

FIG 8 is a flow diagram illustrating the method of FIG 7 in greater detail.

## DETAILED DESCRIPTION

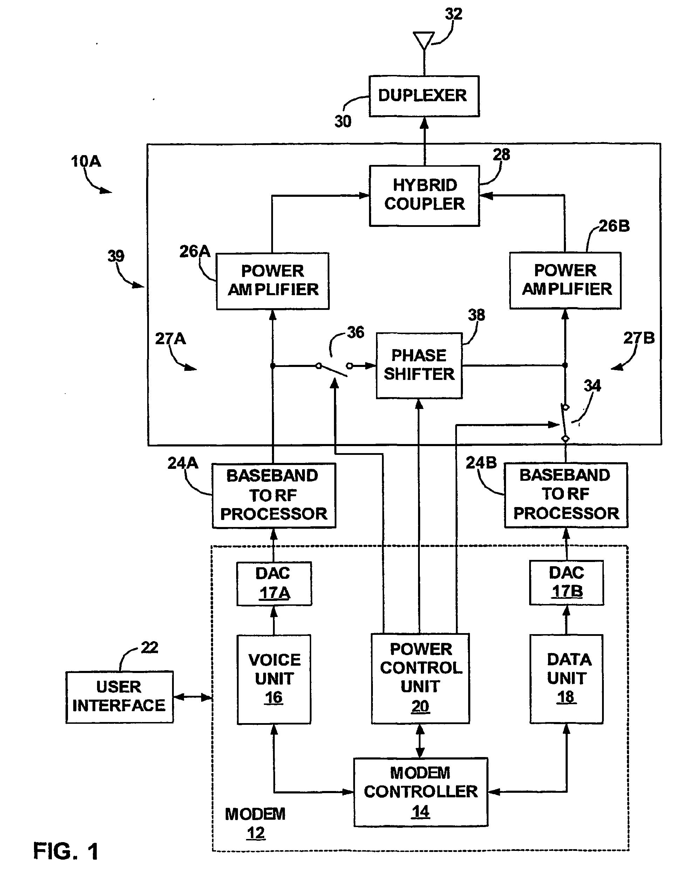

FIG. 1 is a block diagram illustrating a mobile wireless communication device 10A. Device 10A may take the form of a mobile telephone, a satellite telephone, a wireless PDA, a wireless networking card, or any other mobile device with wireless communication capabilities. In general, device 10A is configured to support both voice and data communication and, more particularly, simultaneous voice and data communication. In this manner, a user of device 10A may carry on a voice conversation while accessing data services. Although illustrated for exemplary purposes in the context of a mobile wireless communication device, the techniques may be applied to any wireless communication devices that supports both voice and data communication.

For example, voice and data communication may be accomplished at different carrier frequencies. Device 10A may operate according to one or more of a variety of radio access technologies such as GSM, CDMA 2000, CDMA 2000 1x, CDMA 2000 1xEV-DO, WCDMA, or CDMA 1xEV-DV, provided such technologies support both voice and data communication. In some examples, voice and data communication may be accomplished via a combination of two or more radio access technologies, e.g., one radio access technology providing voice transmission and a different radio access technology providing data transmission.

As will be described, device 10A is capable of combining dual transmitter output branches for high power voice transmission, over a wireless interface associated the device, on a dynamic basis in response to increased power requirements for reliable voice communication. As shown in FIG. 1, device 10A includes a modem 12 having a modem controller 14, a voice transmit (TX) unit 16, a data transmit (TX) unit 18, digital-to-analog converters (DACs) 17A, 17B, and a power control unit 20. As will be described, power control unit 20 provides power control circuitry to selectively transmit a voice call over both output branches for increased transmit power and improved reliability of communication.

Device 10A also includes a user interface 22, which may incorporate a keypad, touchscreen, joystick, or other input media, as well as a display for presentation of information relating to a voice or data call. In addition, device 10A of FIG. 1 includes a baseband-to-RF processor 24A, baseband-to-RF processor 24B, power amplifier 26A, and power amplifier 26B.

Modem 12, as well as its constituent operating units, may take the form of a microprocessor, digital signal processor (DSP), ASIC, FPGA, or other logic circuitry programmed or otherwise configured to operate as described herein. Accordingly, modem controller 14 and operating units 16, 18, 20 may take the form of any of a variety of functional components implemented in hardware, software, firmware, or the like, as well as programmable features executed by a common processor or discrete hardware units.

Baseband-to-RF processors 24A, 24B and power amplifiers 26A, 26B form first and second output branches 27A, 27B for voice transmission and data transmission, respectively. Baseband-to-RF processors 24A, 24B convert the baseband signals generated by modem 12 to RF signals. Power amplifiers 26A, 26B amplify the RF signals for transmission over the air interface. Hybrid coupler 28 includes a coupler circuit that combines the amplified signals from first and second output branches 27A, 27B, and sends the combined signal over a common wireless interface via duplexer 30 and radio frequency antenna 32.

The voice and data signals are transmitted at different carrier frequencies to permit simultaneous transmission of voice and data calls by device 10A. The term "call" generally refers to any wireless communication session involving transfer of voice or data, either one-way or two-way, between device 10 and another device within a wireless communication network. The signals may be transmitted at different carrier frequencies prescribed by a common radio access technology, or as prescribed by separated radio access technologies supported by device. As one example, voice and data could be supported by CDMA 1x EV-DO.

As described herein, device 10A is configured to prioritize voice calls over data calls when increased transmit power is required. Whereas an interruption in a voice call due to insufficient transmit power is catastrophic, data calls are often more tolerant to delay and interruption. CDMA transmitters, for example, tend to have a roughly lognormal transmit output power probability, and only rarely transmit at maximum power. Accordingly, a pair of output branches can independently and simultaneously handle data and voice calls most of the time, but drop the data call and combine the branch outputs when increased power is required for the voice call.

Power control unit 20 may determine that increased transmit power is required for voice communication based on receipt of power control data, such as power up/down bits, from a base station via a control channel in the forward link. Power control unit 20 adjusts transmit power in response to the power control bits. When the transmit power exceeds a threshold, however, power control unit 20 drops the data call in order to obtain increased transmit power for the voice call. The threshold may be a predefined threshold, or a programmable threshold configurable via user interface 22.

For simultaneous voice and data communication, device 10A transmits voice and data calls at different frequencies over different output branches 27A, 27B, and combines the output branches for transmission over a common air interface. When increased transmit power is required, however, the device 10A prioritizes the voice call over the data call. In this case, device 10A sends the voice call over both output branches, taking advantage of power amplifiers 26A, 26B in each output branch 27A, 27B to achieve a greater overall transmit power for more reliable voice communication. When required transmit power is decreased below the threshold, e.g., upon dissipation of fading effects, power control unit 20 may direct recommencement of the data call over output branch 27B.

In this manner, device 10A independently and simultaneously handles data and voice calls under ordinary circumstances, using separate output branches 27A, 27B, but drops the data call and combines the voice and data output branches for voice transmission when increased transmit power is required for the voice transmission. Power control unit 20 is responsible for dropping the data call in response to power requirements. In particular, power control unit 20 controls switches 34, 36 and phase shifter 38. A digital implementation of power control unit 20 may be realized, e.g., as a programmable feature of modem 12. Alternatively, power control unit 20 may be a separate hardware component provided independently of modem 12.

In addition, in some examples, amplifiers 26A, 26B, hybrid coupler 28, switches 34, 36, and phase shifter 38 may be combined to form a power amplifier module 29. In particular, power amplifier module 29 may take the form of an integrated circuit module or a collection of integrated circuit modules that function to deliver the functionality described herein with respect to amplifiers 26A, 26B, hybrid coupler 28, switches 34, 36, and phase shifter 38 may be combined to form a power amplifier module 29.

In other examples, a combined power amplifier/antenna module may be provided on an integrated circuit module or collection of integrated circuit modules. In this case, the power amplifier/antenna module may include amplifiers 26A, 26B, hybrid coupler 28, switches 34, 36, and phase shifter 38, as well as antenna 32 and duplexer 30. Power control unit 20 may be realized as a separate integrated circuit module, integrated with modem 12, or further integrated within power amplifier module 29. Also, in some examples, a power amplifier module 29 may be combined with duplexer 30 and antenna 32 to form a combined power amplifier/antenna module.

As shown in FIG. 1, switch 34 serves to switch out the data signal from second output branch 27B. Power control unit 20 controls switch 34 to switch out the data signal in response to a demand for increased transmit power in excess of a predetermined threshold. In some examples, power control unit 20 also may be configured to disable data TX unit 18, baseband-to-RF processor 24B, or both, when the required transmit power exceeds the threshold. Switch 36 switches in the voice signal from first output branch 27A for transmission via second output branch 27B. In particular, power control unit 20 switches in the voice signal in response to a demand for increased transmit power in excess of a predetermined threshold.

To support the combining of both output branches 27A, 27B, device 10 includes phase shifter 38 and hybrid coupler 28. The phase shifter produces a phase-shifted version of the voice call for transmission over the output branch 27B ordinarily used for data calls. Thus, device 10 transmits the voice signal over one output branch 27A, and a phase-shifted voice signal over the other output branch 27B, each at substantially the same frequency.

The phase-shifted voice signal does not pass through baseband-to-RF processor 24B. Instead, in the example of FIG. 1, each of the voice signals is initially processed by the same baseband-to-RF processor 24A, but then amplified by separate power amplifiers 26A, 26B. Accordingly, the voice signal and the phase-shifted voice signal occupy substantially the same carrier frequency range.

Phase shifter 38 shifts the phase of the switched portion of the voice signal before application to second output branch 27B. For example, the phase shift applied to the voice signal that is switched into output branch 27B may be approximately 90 degrees. As phase shifter 38 is provided to match the characteristics of hybrid coupler 28. In particular, hybrid coupler 28 is preferably a 90-degree hybrid coupler circuit. Accordingly, phase shifter 38 introduces a phase shift of approximately 90 degrees.

When voice and data signals are transmitted via output branches 27A, 27B, they occupy different carrier frequency ranges. When the voice signal is transmitted via both output branches 27A, 27B, however, they occupy substantially the same carrier frequency range. Phase shifter 38 introduces a phase shift into the portion of the voice signal propagated along second output branch 27B. As a result, hybrid coupler 28 is able to additively combine the two voices signals transmitted over output branches 27A, 27B to produce a combined voice signal of substantially increased transmit power.

In other words, the voice calls sent over the first and second output branches occupy the same frequency range, but are phase-shifted relative to one another. In this manner, hybrid coupler 28 produces a voice signal with an increased overall transmit power for more reliable voice communication. Consequently, by prioritizing voice calls over data calls when necessary, device 10A may eliminate the need for dual transmitter chains for voice and data. Instead, simultaneous voice and data communication can be accomplished under ordinary circumstances by combining output branches 27A, 27B via hybrid coupler 28.

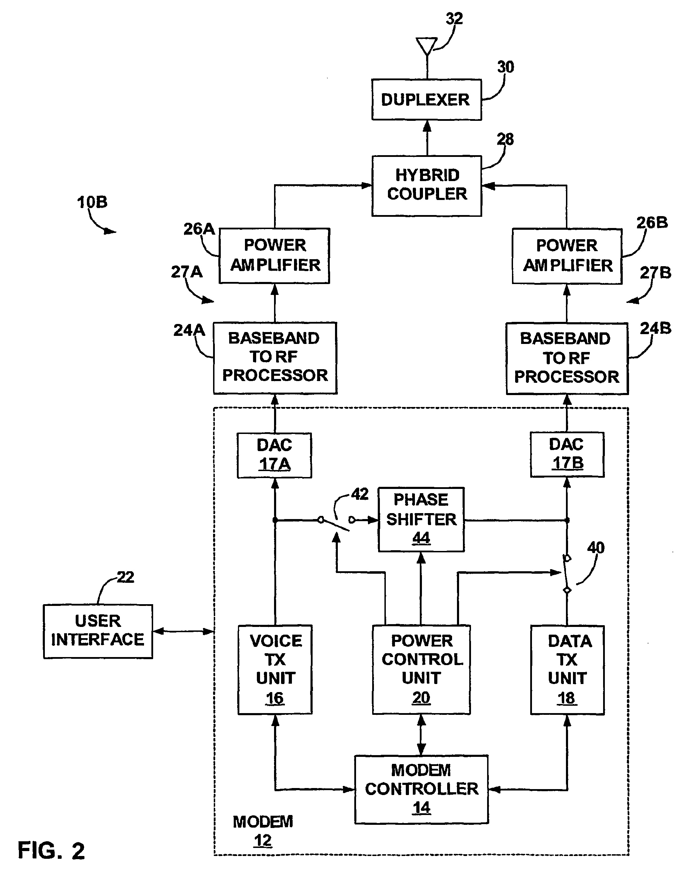

FIG 2 is a block diagram illustrating an alternative wireless communication device 10B capable of combining dual transmitter output branches for high power voice transmission. Device 10B conforms substantially to device 10A of FIG. 1, but represents an exemplary digital implementation in which switches 40 and 42, and a phase shifter 44, are provided within modem 12. In the example of FIG. 2, power control unit 20 switches out the digital data signal produced by data TX unit 18 via switch 40, and switches in the digital voice signal produced by voice TX unit 16 for application to phase shifter 44. Switches 40, 42 and phase shifter may be implemented in hardware, software, firmware, or both. Power control unit 20, switches 40, 42 and phase shifter 44 may form a digital signal processing unit for selectively coupling the voice call and phase-shifted voice call to the output branches. The digital signal processing unit may be realized as an integrated circuit module, either independently or as part of modem 12, as shown in FIG. 2.

Phase shifter 44 then phase shifts the digital values of the voice signal and applies the phase-shifted voice signal to output branch 27B. As in the example of FIG. 1, the phase-shifted voice signal may be shifted by approximately 90 degrees. In this manner, the digital voice signal produced by voice TX unit 16 and the phase-shifted digital voice signal produced by phase shifter 44 are applied to DACs 17A, 17B and output branches 27A, 27B, respectively. In some examples, power control unit 20 may disable or stall data TX unit 18 during transmission of the phase-shifted voice signal via output branch 27B.

As in the example of FIG. 1, device 10B of FIG. 2 transmits the analog voice signal produced by DAC 17A over output branch 27A for processing by baseband-to-RF processor 24A and amplification by power amplifier 26A. The analog voice signal digitally encodes the voice information. In contrast to the example of FIG. 1, however, modem 12 produces the phase-shifted analog voice signal. In particular, when power control unit 20 opens switch 40, closes switch 42, and activates phase shifter 44, DAC 17B outputs the phase-shifted analog voice signal for processing by baseband-to-RF processor 24B. For this reason, baseband-to-RF processor 24B should be dynamically adjustable to handle conversion of the data signal to a first RF carrier range appropriate for data communication, as well as conversion of the phase-shifted voice signal to a second RF carrier range appropriate for voice communication.

Power control unit 20 may transmit a control signal (not shown) to baseband-to-RF processor 24B, or an oscillator associated with the baseband-to-RF processor 24B, to selectively modify the frequency response for processing of the phase-shifted voice signal. Baseband-to-RF processor 24A then converts the phase-shifted analog voice signal to the appropriate RF carrier frequency range. Power amplifier 26B then amplifies the phase-shifted RF voice signal, and transmits the signal to hybrid coupler 28, which may be a 90-degree hybrid coupler. Hence, in the example of FIG. 2, the voice signal and the phase-shifted voice signal produced by modem 12 are processed by different baseband-to-RF processors 24A, 24B within device 10B.

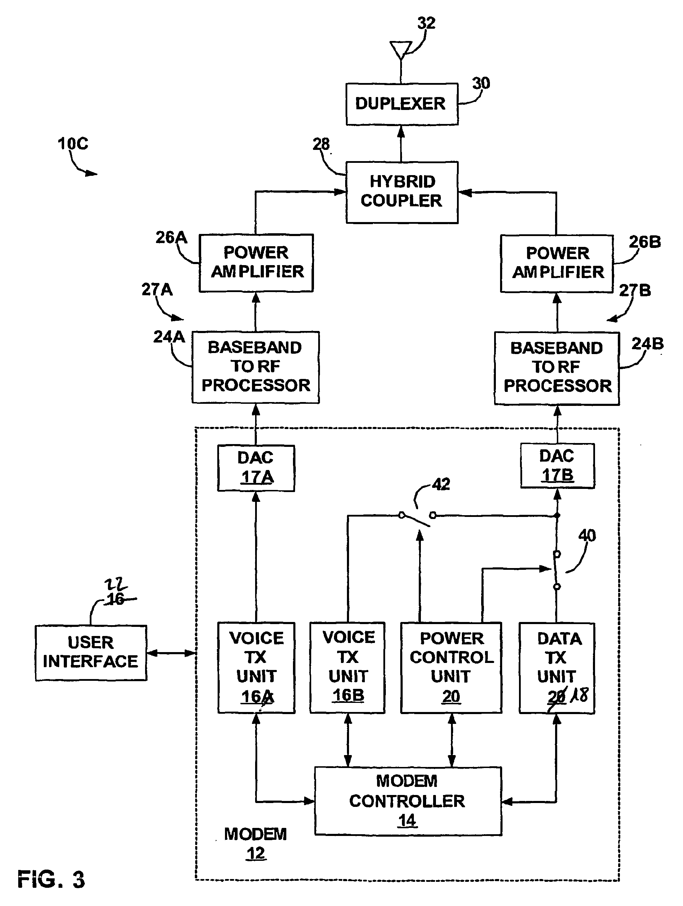

FIG. 3 is another block diagram illustrating an alternative wireless communication device 10C capable of combining dual transmitter output branches for high power voice transmission. Device 10C conforms substantially to devices 10A and 10B of FIGS. 1 and 2, respectively, but represents another exemplary digital implementation. In the example of FIG. 3, power control unit 20, switch 40 and switch 42 may be implemented digitally within modem 12 to form a digital signal processing unit for selectively coupling a voice call and a phase-shifted voice call to the output branches. Instead of a phase shifter, however, modem 12 of device 10C includes two independent voice TX units 16A, 16B. Voice TX unit 16A produces a digital voice signal for transmission over a first output branch 27A. Voice TX unit 16B produces a digital voice signal for transmission over second output branch 27B. In this manner, voice TX unit 16B digitally generates a second voice call substantially identical to the first voice call. However, the digital voice signal generated by voice TX unit 16B is phase-shifted, e.g., 90 degrees, relative to the digital voice signal generated by voice TX unit 16A.

When the required transmit power exceeds a threshold, power control unit 20 opens switch 40 to decouple the output of data TX unit 18 from output branch 27B. Power control unit 20 then closes switch 42 to couple the phase-shifted voice signal produced by voice TX unit 16B to output branch 27B. In addition, power control unit 20 may be configured to disable or stall data TX unit 18 during transmission of the phase-shifted voice signal over output branch 27B. Power control unit 20 also may be configured to activate voice TX unit 16B to generate the phase-shifted voice signal.

Baseband-to-RF processor 24A processes the voice signal output from DAC 17A, while baseband-to-RF processor 24B processes the voice signal output from DAC 17B. As described with reference to FIG 2, baseband-to-RF processor 24B may be configured to provide a selectable frequency response to enable processing of the data signal produced by data TX unit 20 or processing of the phase-shifted voice signal produced by voice TX unit 16B on a selective basis, e.g., under control of power control unit 20. Again, the phase-shifted voice signal occupies a carrier frequency range appropriate for voice communication, whereas the data signal occupies a carrier frequency range appropriate for data communication.

Device 10C eliminates the need for a phase shifter, but incorporates an additional voice TX unit 16B. As in the examples of FIGS. 1 and 2, device 10C of FIG. 3 transmits the analog voice signal produced by DAC 17A over output branch 27A for processing by baseband-to-RF processor 24A and amplification by power amplifier 26A. When power control unit 20 opens switch 40 and closes switch 42, DAC 17B outputs the phase-shifted analog voice signal for processing by baseband-to-RF processor 24B. Power amplifier 26B then amplifies the phase-shifted RF voice signal, and transmits the signal to hybrid coupler 28. Hybrid coupler 28 additively combines the voice signal and the phase-shifted voice signal to achieve an increased transmit power for more reliable voice communication.

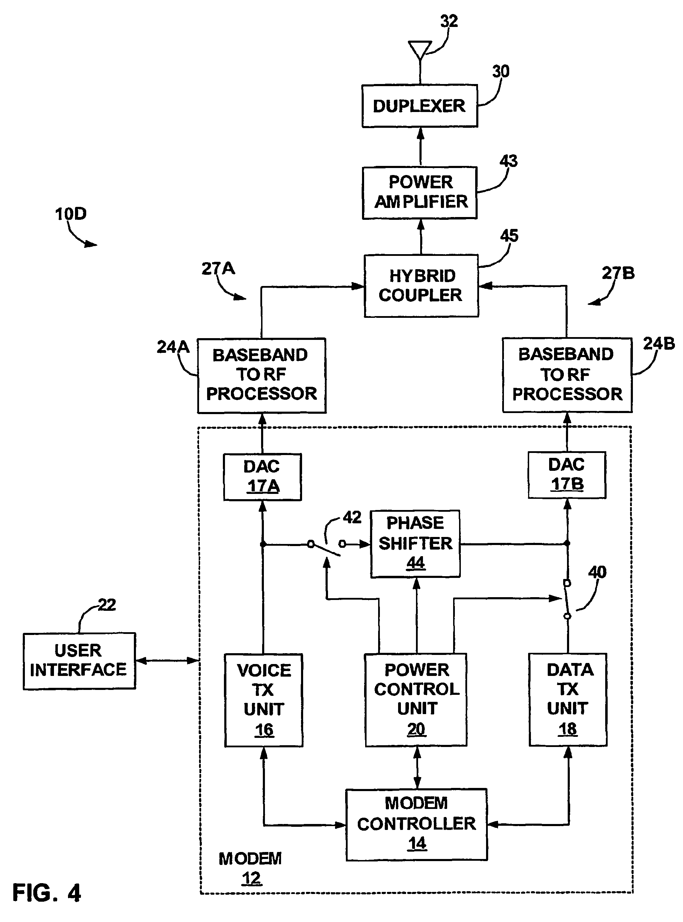

FIG. 4 is a block diagram illustrating an alternative wireless communication device 10D capable of combining dual transmitter output branches for high power voice transmission. Device 10D conforms substantially to device 10C of FIG. 3. However, instead of a power amplifier for each output branch, device 10D includes a single power amplifier 43. Power amplifier 43 amplifies a combined signal provided by hybrid coupler 45. Hybrid coupler combines the respective outputs of baseband-to-RF processors 24A, 24B prior to amplification. In this manner, hybrid coupler 45 combines output branches 27A, 27B, but a single power amplifier 43 amplifies the combined signal. In the example of FIG. 4, hybrid coupler 45 operates at radio frequency. Hence, FIG. 4 may represent a zero intermediate frequency (ZIF) architecture. In other examples, however, hybrid coupler 45 may operate in an intermediate frequency band. Specifically, hybrid coupler 45 may combine signals from output branches 27A, 27B at intermediate frequency for subsequent amplification at radio frequency by power amplifier 43.

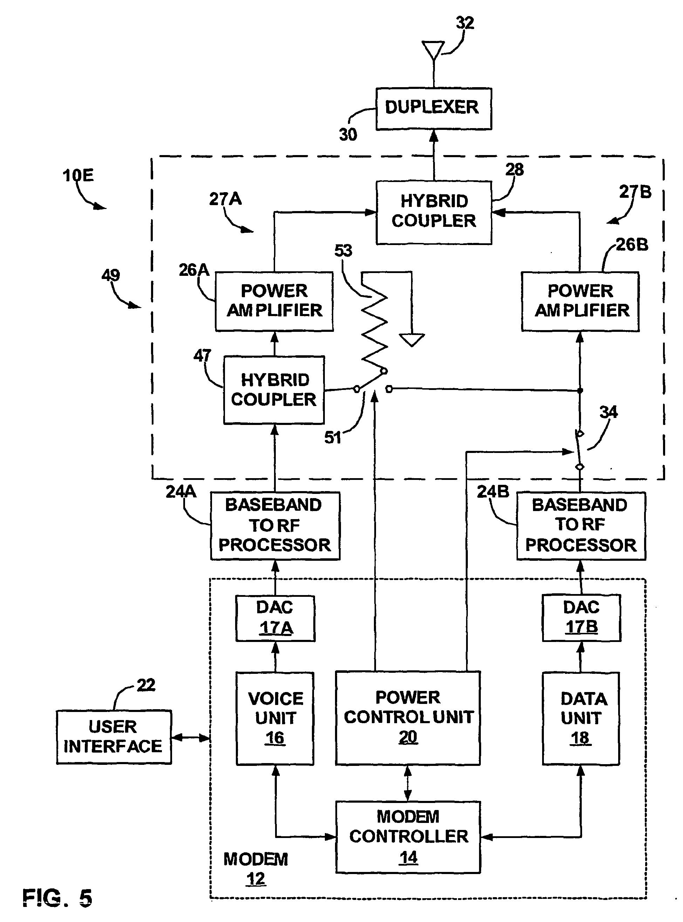

FIG. 5 is a block diagram illustrating an alternative wireless communication device 10E capable of combining dual transmitter output branches for high power voice transmission. Device 10E conforms substantially to device 10B of FIG. 2. However, device 10E includes both an output hybrid coupler 28 and an input hybrid coupler 47. Hybrid couplers 28, 47 and power amplifiers 26A, 26B form a power amplifier module 49.

In the example of FIG. 5, input hybrid coupler 47 includes an input for voice calls received from baseband-to-RF processor 24A. Input hybrid coupler 47 also includes two outputs, one coupled to the input of power amplifier 26A, and another coupled to the input of power amplifier 26B via switch 51 or to a ground termination via resistor 53 (when switch 51 is coupled to resistor 53).

Under ordinary conditions, involving simultaneous voice and data transmission, baseband-to-RF processor 24A passes voice calls to power amplifier 26A via hybrid coupler 47, while baseband-to-RF processor 24B passes data calls to power amplifier 26B via switch 34. For simultaneous voice and data transmission, power control unit 20 opens switch 51 and closes switch 34. In this case, the second output of hybrid coupler 47 is terminated via to ground resistor 53, and the data call is sent via output branch 27B to hybrid coupler 28, providing simultaneous voice and data transmission. Switches 34 and 51 together form an example of a switch device to couple and decouple the phase-shifted voice call and the data call to and from power amplifier 26B.

When the required transmit power for a voice call exceeds an applicable threshold, power control unit 20 decouples the output of baseband-to-RF processor 24B from the input of power amplifier 26B, and closes switch 51 to couple the second output of hybrid coupler 47 to power amplifier 26B. In this case, hybrid coupler 47 produces a phase-shifted version of the voice call at the second output, and transmits the phase-shifted voice call to the input of power amplifier 26B. The voice call transmitted to power amplifier 26B may be phase-shifted by approximately 90 degrees relative to the voice call received by hybrid coupler 47. Hence, in the example of FIG. 5, hybrid coupler 47 plays the role of a phase shifter.

Output hybrid coupler 29 combines the voice call and the phase-shifted voice call to produce an overall voice call with significantly increased transmit power for transmission over duplexer and antenna 32. In particular, hybrid coupler 28 combines the amplified voice call and phase-shifted voice call to achieve an increased overall transmit power for more reliable voice communication. When the required transmit power is below the threshold, power control unit 20 opens switch 51 to terminate the second output of hybrid coupler 47, and closes switch 34 to couple the data call output from baseband-to-RF processor 24B to the input of power amplifier 26B, thereby restoring simultaneous voice and data communication.

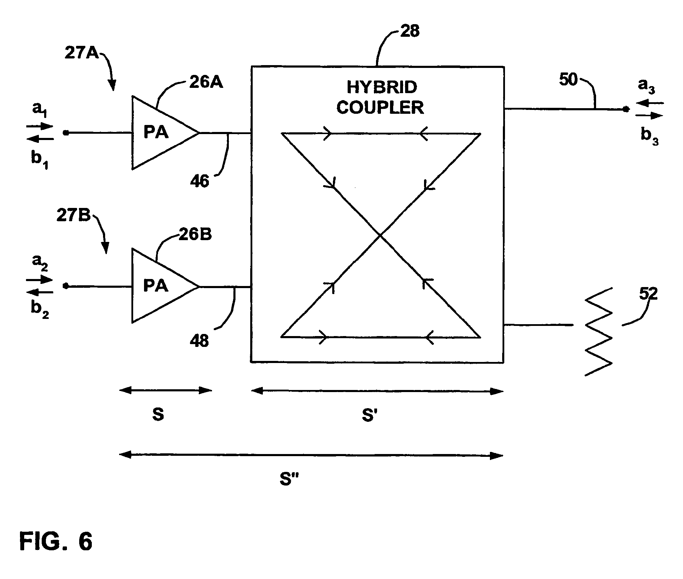

FIG. 6 is a circuit diagram illustrating an exemplary examples of hybrid coupler 28 for use with any of the examples of devices 10A, 10B, 10C, 10D, 10E illustrated in FIGS. 1-5. Hybrid coupler 28 may serve multiple purposes. For example, hybrid coupler 28 provides a good termination for duplexer 30, which would otherwise be exposed to uncertain and uncontrolled output impedance of power amplifiers 26A, 26B. A good termination also serves to maintain the frequency characteristics of duplexer 30, in terms of pass and stop bands. In addition, hybrid coupler 28 provides a good termination for power amplifiers 26A, 26B, which is advisable for power and linearity performance. Also, hybrid coupler 28 may prevent strong external signals from reaching power amplifiers 26A, 26B and causing intermodulation products. In general, hybrid coupler 28 supports an economical scheme for independent transmission of voice and data without the need for isolators.

As shown in FIG 6, power amplifiers 26A, 26B drive the inputs 46, 48 of a 90-degree hybrid coupler 28. The incident "a" and reflected "b" waves from s-parameter theory are also shown in FIG 6. In general, low-power voice signals are transmitted via the upper output branch 27A, data signals are transmitted via the lower output branch 27B, and the output branches are combined to transmit high power voice signals. If the two incident waves, $a_1$ and $a_2$, at the input ports 46, 48 are identical expect for a 90-degree phase shift, they will add, ideally without loss, to produce $a_3$ at the third port. The s-parameters for the two amplifiers 26A, 26B are as follows:

$$S = \begin{bmatrix} s_{11,1} & 0 & s_{12,1} & 0 \\ 0 & s_{11,2} & 0 & s_{12,2} \\ s_{21,1} & 0 & s_{22,1} & 0 \\ 0 & s_{21,2} & 0 & s_{22,2} \end{bmatrix} = \begin{bmatrix} S_{11} & S_{12} \\ S_{21} & S_{22} \end{bmatrix} \quad (1)$$

The s parameters for hybrid coupler 28 are as follows:

$$S' = \frac{1}{\sqrt{2}} \begin{bmatrix} 0 & 0 & 1 \\ 0 & 0 & j \\ 1 & j & 0 \end{bmatrix} = \begin{bmatrix} S'_{11} & S'_{12} \\ S'_{21} & S'_{22} \end{bmatrix}$$

$$(2)$$

Generally, the joint s-parameters are as follows:

$$S'' = \begin{bmatrix} S_{11} + S_{12}S'_{11}(I - S_{22}S'_{11})^{-1}S_{21} & S_{12}(I - S'_{11}S_{22})^{-1}S'_{12} \\ S'_{21}(I - S_{22}S'_{11})^{-1}S_{21} & S'_{22} + S'_{21}S_{22}(I - S'_{11}S_{22})^{-1}S'_{12} \end{bmatrix} \quad (3)$$

Upon substitution of equations (1) and (2), the joint s-parameters are represented as follows:

$$S'' = \frac{1}{\sqrt{2}} \begin{bmatrix} s_{11,1} & 0 & s_{12,1} \\ 0 & s_{11,2} & js_{12,2} \\ s_{21,1} & js_{21,2} & s_{22,1} - s_{22,2} \end{bmatrix}$$

$$(4)$$

To better understand the result, consider the case where the two input waves $a_1$ and $a_2$ are the only inputs. Then, the outward traveling waves can be represented as:

$$\begin{bmatrix} b_1 \\ b_2 \\ b_3 \end{bmatrix} = S'' \begin{bmatrix} a_1 \\ a_2 \\ 0 \end{bmatrix} = \frac{1}{\sqrt{2}} \begin{bmatrix} a_1 s_{11,1} \\ a_2 s_{11,2} \\ a_1 s_{21,2} + ja_2 s_{21,2} \end{bmatrix}$$

$$(5)$$

If the input ports of amplifiers 26A, 26B are matched ($s_{11,1} = s_{11,2} = 0$), their gains are equal, then:

$$\begin{bmatrix} b_1 \\ b_2 \\ b_3 \end{bmatrix} = \frac{1}{\sqrt{2}} \begin{bmatrix} 0 \\ 0 \\ s_{21}(a_1 + ja_2) \end{bmatrix}$$

$$(6)$$

In view of expression (6) above, it is apparent that the output 50 of coupler 28 is the sum of the inputs 46, 48, with a phase shift, and is scaled by the gain of the amplifiers 26A, 26B. In the special case in which $a_2 = -ja_1$, the output of hybrid coupler 28 is $2s_{21}a_1/\sqrt{2}$, and the signals combine without substantial loss. If the inputs 46, 48 to hybrid coupler 28 are independent, e.g., at different carrier frequencies as in the case of simultaneous voice and data transmission, half the power is delivered to output 50 of the hybrid coupler and half the power is delivered to termination 52.

Given the characteristics described above, hybrid coupler 28 can be configured to support a dual transmission scheme as outlined in this disclosure. When increased transmit power is required for voice transmission, and the required transmit power exceeds a predetermined threshold, hybrid coupler 28 combines the two output branches 27A, 27B without substantial loss by correctly phasing the signal in each output branch. Thus, for high-power speech, the inputs 46, 48 to hybrid coupler 28 are identical apart from the 90-degree phase difference. Otherwise, with independent signals such as voice and data at different carrier frequencies, there is a 3 dB combining loss. The combining loss will tend to be less significant at low and medium transmit power. In that power range, the current ordinarily will be closer to the quiescent level and should not deviate significantly over a few decibels of power.

Hybrid coupler 28 also provides a good output termination if amplifiers 26A, 26B have identical reflection coefficient. In other words, hybrid coupler 28 should provide a good source termination for duplexer 30. This characteristic can be observed by imagining a signal directed toward the output of hybrid coupler 28, in which case:

$$\begin{bmatrix} b_1 \\ b_2 \\ b_3 \end{bmatrix} = S'' \begin{bmatrix} 0 \\ 0 \\ a_3 \end{bmatrix} = \frac{1}{\sqrt{2}} \begin{bmatrix} s_{12,1} \\ js_{12,2} \\ s_{22,1} + js_{22,2} \end{bmatrix} \qquad (7)$$

If both amplifiers 26A, 26B operate unilaterally, then $s_{12,1} = s_{12,2} = 0$. If amplifiers 26A, 26B also have identical output reflection coefficients, then $s_{22,1} = s_{22,2}$, and:

$$\begin{bmatrix} b_1 \\ b_2 \\ b_3 \end{bmatrix} = S'' \begin{bmatrix} 0 \\ 0 \\ a_3 \end{bmatrix} = a_3 \begin{bmatrix} 0 \\ 0 \\ 0 \end{bmatrix} \qquad (8)$$

Notably, there is no reflected signal. Instead, the incident wave is directed to the termination 52 of hybrid coupler 28. In general, the output 50 of hybrid coupler 28 serves as a good termination, even if the outputs of amplifiers 26A, 26B are not. This property may permit elimination of an additional isolator between amplifiers 26A, 26B and duplexer 30.

When hybrid coupler 28 operates with carriers at different frequencies, i.e., voice and data signals are received at the inputs 46, 48 of the hybrid coupler, the isolation between the input ports has special significance. The appearance of two different frequencies at the output of power amplifiers 26A, 26B presents the potential for intermodulation products to be radiated at troublesome strengths and frequencies. Isolation is influenced not only by the construction of hybrid coupler 28, but also by the load termination, i.e., duplexer 30. If the input to duplexer 30 has a reflection coefficient $\rho_L$, then $a_3$ may be represented as $\rho_L b_3$ and substituted into equation (2) as follows:

$$\begin{bmatrix} b_1 \\ b_2 \end{bmatrix} = \frac{\rho_L}{2} \begin{bmatrix} 1 & j \\ 1 & j \end{bmatrix} \begin{bmatrix} a_1 \\ a_2 \end{bmatrix} \qquad (9)$$

Hence, with a non-zero reflection coefficient of the load, both signals are reflected back toward each input 46, 48 of hybrid coupler 28, i.e., to the respective outputs of amplifiers 26A, 26B. Accordingly, the RF performance of hybrid coupler 28 may be designed to specifically address this situation.

There is an advantage in the coupler-based architecture of device 10 with respect to receiver-band noise. In particular, the noise level of each amplifier 26A, 26B is less than an amplifier operating at twice the output power. Assuming, for purposes of illustration, that the output noise level of each amplifier 26A, 26B is -140 dBm/Hz, the signal outputs of each amplifier combine in-phase at the output port of hybrid coupler 28 for high power speech, when the receiver-band noise is most detrimental. The noise from each amplifier 26A, 26B, conversely, is independent and is therefore split between the output 50 of hybrid coupler 28 and the termination 52. In effect only the equivalent noise level of a single amplifier 26A, 26B is transmitted to output 50.

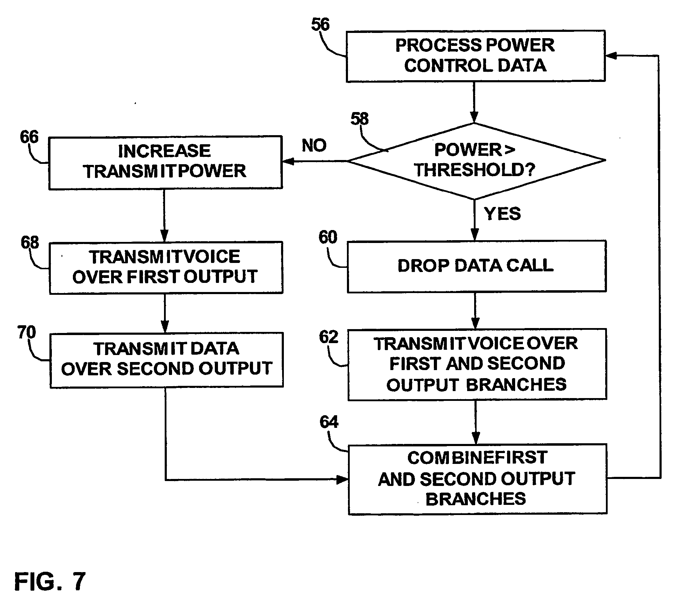

FIG 7 is a flow diagram illustrating a method for combining dual transmitter output branches 27A, 27B (FIGS 1-5) for high power voice transmission. The method depicted in FIG 7 assumes the presence of two output branches 27A, 27B that ordinarily handle voice and data calls independently and simultaneously. As shown in FIG 7, power control unit 20 processes power control data (56), such as power control bits received from a base station in the forward link, to determine whether transmit power for a voice call should be increased or decreased.

If the required transmit power for the voice call exceeds a threshold (58), power control unit 20 controls one or more switch arrangements to drop the data call (60), and transmits the voice call over both the first and second output branches 27A, 27B (62). Hybrid coupler 28 then combines the first and second output branches 27A, 27B for high power transmission of the voice call (64).

If the required transmit power for the voice call does not exceed the applicable threshold (58), power control unit 20 simply increases the transmit power on output branch 27A as needed (66), e.g., by increasing the gain of power amplifier 26A. In this case, device 10 continues to simultaneously and independently transmit the voice call over output branch 27A (68) and the data call over output branch 27B (70). Hybrid coupler 28 then combines the first and second output branches 27A, 27B for transmission of both the voice call and the data call via a common air interface (64). When the required transmit power drops below the threshold, power control unit 20 may direct that a data call be resumed or restarted.

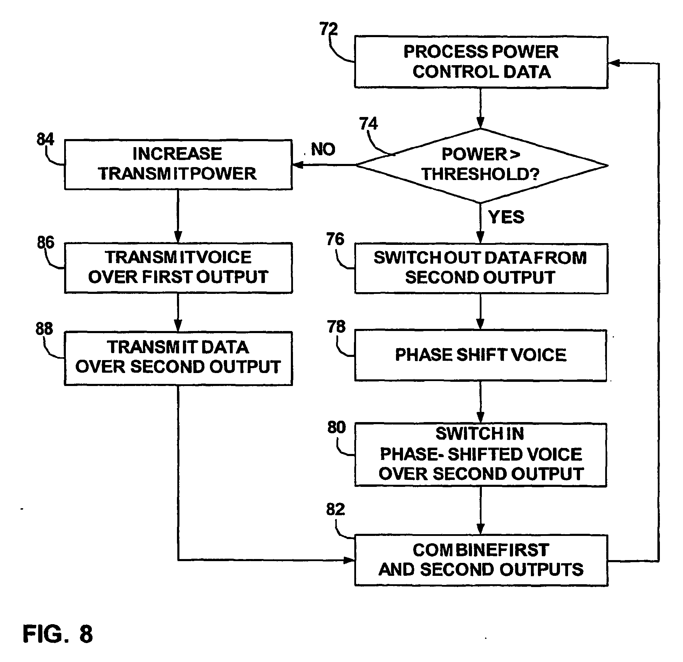

FIG 8 is a flow diagram illustrating the method of FIG 7 in greater detail. As in the example of FIG 7, power control unit 20 processes power control data (72), and determines whether the required transmit power exceeds a threshold (74). If so, power control unit 20 switches out the data call from second output branch 27B (76), produces a phase-shifted component of the voice call (78) and switches in the phase-shifted voice component over second output branch 27B (80). Hybrid coupler 28 then combines first and second output branches 27A, 27B for high power transmission of the voice call (82).

If the required transmit power for the voice call does not exceed the applicable threshold (74), power control unit 20 simply increases the transmit power on output branch 27A as needed (84), e.g., by increasing the gain of power amplifier 26A. In this case, device 10 continues to simultaneously and independently transmit the voice call over output branch 27A (86) and the data call over output branch 27B (88). Hybrid coupler 28 then combines the first and second output branches 27A, 27B for transmission of both the voice call and the data call via a common air interface (82). When the required transmit power drops below the threshold, power control unit 20 may direct that a data call be resumed or restarted.

Various examples have been described. Example hardware implementations for the functional components described herein may include implementations within a microprocessor, digital signal processor (DSP), an application specific integrated circuit (ASIC), a field programmable gate array (FPGA), a programmable logic device, specifically designed hardware components, or any combination thereof. In addition, one or more of the techniques described herein may be partially or wholly executed in software. In that case, a computer readable medium may store or otherwise comprise computer-readable instructions, i.e., program code that can be executed by a processor or DSP of a wireless communication device to carry out one of more of the techniques described above. For example, the computer readable medium may comprise random access memory (RAM), read-only memory (ROM), non-volatile random access memory (NVRAM), electrically erasable programmable read-only memory (EEPROM), flash memory, or the like.

Numerous other modifications may be made without departing from the example scope of this disclosure. Accordingly, these and other examples are within the scope of the following claims.

**Claims**

1. A mobile wireless communication device (10A, 10B, 10C, 10D, 10E) comprising means (16, 16A, 17A, 24A, 26A) for transmitting a voice call via a first output branch (27A), means (18, 17B, 24B, 26B) for transmitting a data call via a second output branch (27B), and means (28, 45) for combining the first and second output branches for transmission over a wireless interface (30, 32) associated with the mobile wireless communication device (10A, 10B, 10C, 10D, 10E), the device further **characterized by**:

   means (34, 36, 38, 40, 42, 44, 47, 51) for transmitting the voice call via both the first and second output branches (27A, 27B) when required transmit power for the voice call exceeds a threshold.

2. The device of claim 1, further comprising:

   a first amplifier (26A) adapted to amplify the voice call for transmission over the first output branch (27A); and
   a second amplifier (26B) adapted to amplify the data call for transmission over the second output branch (27B);

   wherein the means for transmitting the voice call via both the first and second output branches comprises:

   a phase shifter (38, 44, 47) adapted to generate a phase-shifted version of the voice call; and
   a switch (34, 36, 40, 42, 51) adapted to decouple the data call from the second amplifier and couple the phase-shifted version of the voice call to the second amplifier when required transmit power for the voice call exceeds the threshold.

3. The device of claim 2, wherein the means for combining comprises a coupler circuit (28, 45) adapted to combine the first and second output branches (27A, 27B) for transmission over the wireless interface associated with the mobile wireless communication device.

4. The device of claim 3, wherein the coupler circuit includes a 90-degree hybrid coupler (28, 45) adapted to combine the first and second output branches.

5. The power amplifier module of claim 2, further comprising a power control unit (20) adapted to control the phase shifter (38, 44, 47) and the switch (34, 36, 40, 42, 51) based on required transmit power for the voice call.

6. The device of claim 5, wherein the power control unit (20) is adapted to monitor power control data, and control the phase shifter (38, 44, 47) and the switch (34, 36, 40, 42, 51) in response to the power control data.

7. The device of claim 5, wherein the power control unit (20) is adapted to control the switch (34, 36, 40, 42, 51) to couple the data call to the second amplifier (26B) and decouple the voice call from the second amplifier (26B) when the required transmit power is less than the threshold.

8. The device of claim 2, wherein the voice call and the phase-shifted voice call are identical except for the phase shift.

9. The device of claim 2, wherein the phase shifter (38, 44, 47) is adapted to phase-shift the voice call approximately 90 degrees.

10. The device of claim 1, further comprising:

a first amplifier (26A) adapted to amplify the voice call for transmission over the first output branch (27A); and
a second amplifier (26B) adapted to amplify the data call for transmission over the second output branch (27B);

wherein the means for combining comprises a coupler circuit (28, 45) adapted to combine the first and second output branches for transmission over the wireless interface associated with the mobile wireless communication device, and
wherein the means for transmitting the voice call via both the first and second output branches comprises means (34, 36, 40, 42, 51) for coupling a phase-shifted version of the voice call to the second amplifier (26B) when required transmit power for the voice call exceeds a threshold.

11. The device of claim 10, wherein the coupler circuit (28, 45) includes a 90-degree hybrid coupler that is adapted to combine the first and second output branches (27A, 27B).

12. The device of claim 10, wherein the coupling means includes a switch (34, 36, 40, 42, 51) adapted to decouple the data call from the second amplifier (26B) and couple the phase-shifted version of the voice call to the second amplifier (26B) when required transmit power for the voice call exceeds the threshold.

13. The device of claim 10, further comprising a phase shifter (38, 44, 47) adapted to generate the phase-shifted version of the voice call when required transmit power for the voice call exceeds the threshold.

14. The device of claim 13, wherein the phase shifter (38, 44, 47) is adapted to phase-shift the voice call approximately 90 degrees.

15. The device of claim 10, further comprising a power control unit (20) adapted to control the coupling means (34, 36, 40, 42, 51) based on the required transmit power for the voice call.

16. The device of claim 15, wherein the power control unit (20) is adapted to monitor power control data, and control the coupling means (34, 36, 40, 42, 51) in response to the power control data.

17. The device of claim 10, wherein the power control unit (20) is adapted to control the coupling means (34, 36, 40, 42, 51) to couple the data call to the second amplifier (26B) and decouple the voice call from the second amplifier (26B) when the required transmit power is less than the threshold.

18. The device of claim 10, wherein the voice call and the phase-shifted voice call are identical except for the phase shift.

19. The device of claim 1, further comprising:

a radio frequency antenna (32) for the wireless interface associated with the mobile wireless communication device (10A, 10B, 10C, 10D, 10E).

20. The device of claim 1, wherein:

the means (16, 16A, 17A, 24A, 26A) for transmitting a voice call comprises a voice call transmission unit (16) adapted to generate a voice call for transmission via a first output branch (27A);
the means (18, 17B, 24B, 26B) for transmitting a data call comprises a data call transmission unit (18) adapted to generate a data call for transmission via a second output branch (27B); and
the means (34, 36, 38, 40, 42, 44, 47, 51) for transmitting the voice call via both the first and second output branches comprises:

a phase shifter (38, 44, 47) adapted to generate a phase-shifted version of the voice call; and
a switch (34, 36, 38, 40, 42, 44, 47, 51) adapted to decouple the data call from the second output branch (27B) and couple the phase-shifted version of the voice call to the second output branch (27B) when required transmit power for the voice call exceeds the threshold.

21. The device of claim 20, further comprising a power control unit (20) adapted to control the phase shifter (38, 44, 47) and the switch (34, 36, 38, 40, 42, 44, 47, 51) based on required transmit power for the voice call.

22. The device of claim 21, wherein the power control unit (20) is adapted to monitor power control data, and control the phase shifter (38, 44, 47) and the switch (34, 36, 38, 40, 42, 44, 47, 51) in response to the power control data.

23. The device of claim 22, wherein the power control unit (20) is adapted to control the switch (34, 36, 38, 40, 42, 44, 47, 51) to couple the data call to the second amplifier (26B) and decouple the voice call from the second amplifier (26B) when the required transmit power is less than the threshold.

24. The device of claim 20, wherein the voice call and the phase-shifted voice call are identical except for the phase shift.

25. The device of claim 20, wherein the phase shifter (38, 44, 47) is adapted to phase-shift the voice call approximately 90 degrees.

26. The device of claim 1, wherein:

the means for combining includes a coupler circuit (28, 45) adapted to combine the first and second output branches for transmission over the wireless interface (32) associated with the mobile wireless communication device (10A, 10B, 10C, 10D, 10E), the device further comprising:

a power control unit (20) adapted to direct transmission of the voice call via both the first and second output branches (27A, 27B) when required transmit power for the voice call exceeds a threshold.

27. The device of claim 26, further comprising a phase shifter (38, 44, 47) adapted to phase-shift the voice call to produce a phase-shifted voice call, wherein the power control unit (20) is adapted to direct transmission of the voice call via the first output branch (27A) and direct transmission of the phase-shifted voice call via the second output branch (27B).

28. The device of claim 27, wherein the voice call and the phase-shifted voice call are identical except for the phase shift.

29. The device of claim 27, wherein the phase shifter (38, 44, 47) is adapted to phase-shift the voice call approximately 90 degrees.

30. The device of claim 27, wherein the coupler circuit (28, 45) includes a 90-degree hybrid coupler (28, 45) adapted to combine the first and second output branches.

31. The device of claim 26, wherein the power control unit (20) is adapted to monitor power control data, and increase the transmit power of the voice call in response to the power control data.

32. The device of claim 26, wherein the power control unit (20) is adapted to direct transmission of the voice call via both the first and second output branches (27A, 27B) by decoupling the data call from the second output branch (27B) and coupling the voice call to the second output branch (27B).

33. The device of claim 26, wherein the power control unit (20) is adapted to direct transmission of the voice call via both the first and second output branches (27A, 27B) by directing digital generation of a second voice call identical to the first voice call and coupling the second voice call to the second output branch (27B).

34. The device of claim 26, wherein the power control unit (20) is adapted to direct coupling of the data call to the second output branch (27B) and decoupling of the voice call from the second output branch (27B) when the required transmit power is less than the threshold.

35. The device of claim 26, further comprising:

   a first power amplifier (26A) adapted to amplify the voice call transmitted via the first output branch; and
   a second power amplifier (26B) adapted to amplify the voice call transmitted via the second output,

wherein the coupler circuit (28, 45) is adapted to combine the first and second amplified voice calls.

36. The device of claim 35, further comprising:

   a first baseband to radio frequency processor (24A) adapted to convert the voice call from a baseband frequency to a first carrier frequency; and
   a second baseband to radio frequency processor (24B) adapted to convert the data call from a baseband frequency to a second carrier frequency.

37. The device of claim 36, wherein the phase shifter (38, 44, 47) is coupled to the output branch of the first baseband to radio frequency processor (24A).

38. The device of claim 1, wherein:

   the first output branch (27A) is adapted to transmit the voice call at a first transmit carrier frequency;
   the second output branch (27B) is adapted to transmit the data call at a second transmit frequency; and
   the device (10A, 10B, 10C, 10D, 10E) further comprises a power control unit (20) adapted to control a transmit power of the voice call in response to power control data, wherein the power control unit is adapted to drop the data call and direct transmission of the voice call via both the first and second output branches (27A, 27B) at the first transmit carrier frequency when the transmit power of the voice call exceeds a threshold.

39. The device of claim 38, further comprising a phase shifter (38, 44, 47) adapted to phase-shift the voice call to produce a phase-shifted voice call, wherein the power control unit (20) is adapted to direct transmission of the voice call via the first output branch (27A) and direct transmission of the phase-shifted voice call via the second output branch (27B).

40. The device of claim 39, wherein the phase shifter (38, 44, 47) is adapted to phase-shift the voice call approximately 90 degrees.

41. The device of claim 1, further comprising means (38, 44, 47) for phase-shifting the voice call to produce a phase-shifted voice call, wherein the means for transmitting the voice call via both the first and second output branches (27A, 27B) includes means for transmitting the voice call via the first output branch (27A) and transmitting the phase-shifted voice call via the second output branch (27B).

42. The device of claim 41, wherein the voice call and the phase-shifted voice call are identical except for the phase shift.

43. The device of claim 41, wherein the phase-shifting means is adapted to phase-shift the voice call approximately 90 degrees.

44. The device of claim 43, further comprising a 90-degree hybrid coupler (28, 45) for combining the first and second

13

output branches (27A, 27B).

45. The device of claim 1, wherein the voice call has a first carrier frequency, and the data call has a second carrier frequency different from the first carrier frequency.

46. The device of claim 1, wherein the means for transmitting comprises:

a first hybrid coupler (47) adapted to pass the voice call to the first amplifier (26A) and generate a phase-shifted version of the voice call;

a switch device (34, 51) adapted to couple the phase-shifted version of the voice call to the second amplifier (26B), and decouple the data call from the second amplifier (26B) when required transmit power for the voice call exceeds a threshold; and

a second hybrid coupler (28) adapted to combine the first and second output branches (27A, 27B) for transmission over a wireless interface (32) associated with the mobile wireless communication device (10E).

47. The device of claim 46, wherein the first hybrid coupler (47) includes a 90-degree hybrid coupler, and the second hybrid coupler (28) includes a 90-degree hybrid coupler.

48. The device of claim 46, further comprising a power control unit (20) adapted to control the switch device (34, 51) based on required transmit power for the voice call.

49. The device of claim 48, wherein the power control unit (20) is adapted to monitor power control data, and control the switch device (34, 51) in response to the power control data.

50. The device of claim 48, wherein the power control unit (20) is adapted to control the switch device (34, 51) to couple the data call to the second amplifier (26B) when the required transmit power is less than the threshold.

51. A method comprising:

transmitting a voice call via a first output branch (27A)-and

transmitting a data call via a second output branch (27B), and

combining (64) the first and second output branches (27A, 27B) for transmission over a wireless interface (32) associated with a mobile wireless communication device (10A, 10B, 10C, 10D, 10E); further **characterized by** transmitting (62) the voice call via both the first and second output branches (27A, 27B) when required transmit power for the voice call exceeds a threshold.

52. The method of claim 51, further comprising phase-shifting (78) the voice call to produce a phase-shifted voice call, wherein transmitting the voice call via both the first and second output branches (62) includes transmitting the voice call via the first output branch and transmitting the phase-shifted voice call via the second output branch (80).

53. The method of claim 52, wherein the voice call and the phase-shifted voice call are identical except for the phase shift.

54. The method of claim 52, wherein phase-shifting the voice call includes phase-shifting the voice call approximately 90 degrees.

55. The method of claim 54, further comprising combining the first and second output branches via a 90-degree hybrid coupler (28, 45).

56. The method of claim 51, further comprising:

monitoring power control data (56, 58, 72, 74); and

increasing the transmit power of the voice call (66, 84) in response to the power control data.

57. The method of claim 51, wherein transmitting the voice call via both the first and second output branches includes decoupling the data call from the second output branch (60, 76) and coupling the voice call to the second output branch (62, 80).

58. The method of claim 51, wherein transmitting the voice call via both the first and second output branches includes digitally generating a second voice call identical to the first voice call and coupling the second voice call to the second output branch.

**59.** The method of claim 51, further comprising coupling the data call to the second output branch and decoupling the voice call from the second output branch when the required transmit power is less than the threshold.

**60.** The method of claim 51, further comprising:

amplifying the voice call transmitted via the first output branch with a first power amplifier; and amplifying the voice call transmitted via the second output with a second power amplifier,

wherein combining the first and second output branches includes combining the first and second amplified voice calls.

**61.** The method of claim 60, further comprising:

transmitting the voice call at a first carrier frequency; and transmitting the data call at a second carrier frequency.

**62.** The method of claim 51, further comprising:

transmitting the voice call at a first transmit carrier frequency via the first output branch (27A); transmitting the data call at a second transmit carrier frequency via the second output branch (27B); controlling a transmit power of the voice call in response to power control data; and dropping the data call and transmitting the voice call via both the first and second output branches (27A, 27B) at the first transmit carrier frequency when the required transmit power of the voice call exceeds a threshold.

**63.** The method of claim 62, further comprising phase-shifting the voice call to produce a phase-shifted voice call, wherein transmitting the voice call via both the first and second output branches (27A, 27B) includes transmitting the voice call via the first output branch (27A) and transmitting the phase-shifted voice call via the second output branch (27B).

**64.** The method of claim 62, wherein phase-shifting the voice call includes phase-shifting the voice call approximately 90 degrees.

## Patentansprüche

**1.** Ein bewegliches, drahtloses Kommunikationsgerät (10A, 10B, 10C, 10D, 10E), das Mittel (16, 16A, 17A, 24A, 26A) aufweist zum Übertragen einer Sprachverbindung über einen ersten Ausgangszweig (27A), Mittel (18, 17B, 24B, 26B) zum Übertragen einer Datenverbindung über einen zweiten Ausgangszweig (27B) und Mittel (28, 45) zum Kombinieren des ersten und des zweiten Ausgangszweiges zum Übertragen über eine drahtlose Schnittstelle (30, 32), die dem beweglichen drahtlosen Kommunikationsgerät (10A, 10B, 10C, 10D, 10E) zugeordnet ist, das Gerät weiterhin charakterisiert durch:

Mittel (34, 36, 38, 40, 42, 44, 47, 51) zum Übertragen der Sprachverbindung über beide, den ersten und den zweiten Ausgangszweig (27A, 27B), wenn eine geforderte Sendeleistung für die Sprachverbindung eine Schwelle übersteigt.

**2.** Gerät nach Anspruch 1 weiterhin aufweisend:

einen ersten Verstärker (26A), der angepasst ist, die Sprachverbindung zum Übertragen über den ersten Ausgangszweig (27A) zu verstärken; einen zweiten Verstärker (26B), der angepasst ist, die Datenverbindung zum Übertragen über den zweiten Ausgangszweig (27B) zu verstärken;

wobei die Mittel zum Übertragen der Sprachverbindung über beide, den ersten und den zweiten Ausgangszweig, umfassen:

einen Phasenschieber (3 8, 44, 47), der angepasst ist, eine phasenverschobene Version der Sprachverbindung zu erzeugen; und

einen Schalter (34, 36, 40, 42, 51), der angepasst ist, die Datenverbindung von dem zweiten Verstärker zu entkoppeln und die phasenverschobene Version der Sprachverbindung mit dem zweiten Verstärker zu verbinden, wenn die geforderte Sendeleistung der Sprachverbindung die Schwelle übersteigt.

3. Gerät nach Anspruch 2, wobei das Mittel zum Kombinieren eine Kopplerschaltung (28, 45) umfasst, die angepasst ist, um den ersten und den zweiten Ausgangszweig (27A, 27B) zum Übertragen über die drahtlose Schnittstelle zu kombinieren, die dem beweglichen drahtlosen Kommunikationsgerät zugeordnet ist.

4. Gerät nach Anspruch 3, wobei die Kopplerschaltung einen 90° Richtkoppler (28, 45) umfasst, der angepasst ist, den ersten und den zweiten Ausgangszweig zu kombinieren.

5. Leistungsverstärkermodul nach Anspruch 2, weiterhin aufweisend eine Leistungssteuereinheit (20), die angepasst ist, den Phasenschieber (38, 44, 47) und den Schalter (34, 36, 40, 42, 51) zu steuern, auf der Grundlage geforderter Sendeleistung für die Sprachverbindung.

6. Gerät nach Anspruch 5, wobei die Leistungssteuereinheit (20) angepasst ist, die Leistungssteuerdaten zu überwachen und den Phasenschieber (38, 44, 47) und den Schalter (34, 36, 40, 42, 51) in Antwort auf die Leistungssteuerdaten zu steuern.

7. Gerät nach Anspruch 5, wobei die Leistungssteuereinheit (20) angepasst ist, den Schalter (34, 36, 40, 42, 51) zu steuern, um die Datenverbindung mit dem zweiten Verstärker (26B) zu koppeln und die Sprachverbindung von dem zweiten Verstärker (26B) zu entkoppeln, wenn die geforderte Sendeleistung geringer als die Schwelle ist.

8. Gerät nach Anspruch 2, wobei die Sprachverbindung und die phasenverschobene Sprachverbindung mit Ausnahme der Phasenverschiebung identisch sind.

9. Gerät nach Anspruch 2, wobei der Phasenschieber (38, 44, 47) angepasst ist, um die Sprachverbindung um ungefähr 90° in der Phase zu verschieben.

10. Gerät nach Anspruch 1, weiterhin aufweisend:

einen ersten Verstärker (26A), der angepasst ist, um die Sprachverbindung zum Übertragen über den ersten Ausgangszweig (27A) zu verstärken; und

einen zweiten Verstärker (26B), der angepasst ist, um die Datenverbindung zum Übertragen über den zweiten Ausgangszweig (27B) zu verstärken;

wobei das Mittel zum Kombinieren eine Kopplerschaltung (28, 45) umfasst, die angepasst ist, um den ersten und den zweiten Ausgangszweig zum Übertragen über die drahtlose Schnittstelle, die dem mobilen drahtlosen Kommunikationsgerät zugeordnet ist, zu kombinieren, und

wobei das Mittel zum Übertragen der Sprachverbindung über beide, den ersten und den zweiten Ausgangszweig Mittel (34, 36, 40, 42, 51) umfasst, zum Koppeln einer phasenverschobenen Version der Sprachverbindung mit dem zweiten Verstärker (26B), wenn geforderte Sendeleistung für die Sprachverbindung eine Schwelle übersteigt.

11. Gerät nach Anspruch 10, wobei die Kopplerschaltung (28, 45) einen 90° Richtkoppler umfasst, der angepasst ist, den ersten und den zweiten Ausgangszweig (27A, 27B) zu kombinieren.

12. Gerät nach Anspruch 10, wobei das Kopplungsmittel einen Schalter (34, 36, 40, 42, 51) umfasst, der angepasst ist, die Datenverbindung von dem zweiten Verstärker (26B) zu entkoppeln und die phasenverschobene Version der Sprachverbindung mit dem zweiten Verstärker (26B) zu verbinden, wenn die geforderte Sendeleistung für die Sprachverbindung eine Schwelle übersteigt.

13. Gerät nach Anspruch 10, weiterhin aufweisend einen Phasenschieber (38, 44, 47) der angepasst ist, die phasenverschobene Version der Sprachverbindung zu erzeugen, wenn geforderte Sendeleistung für die Sprachverbindung die Schwelle übersteigt.

14. Gerät nach Anspruch 13, wobei der Phasenschieber (38, 44, 47) angepasst ist die Sprachverbindung um ungefähr 90° in der Phase zu verschieben.

15. Gerät nach Anspruch 10, weiterhin aufweisend, eine Leistungssteuereinheit (20), die angepasst ist, das Kopplungsmittel (34, 36, 40, 42, 51) auf der Grundlage der geforderten Sendeleistung der Sprachverbindung zu steuern.

16. Gerät nach Anspruch 15, wobei die Leistungssteuereinheit (20) angepasst ist, die Leistungssteuerdaten zu überwachen und das Kopplungsmittel (34, 36, 40, 42, 51) in Antwort auf die Leistungssteuerdaten zu steuern.

17. Gerät nach Anspruch 10, wobei die Leistungssteuereinheit (20) angepasst ist, das Kopplungsmittel (34, 36, 40, 42, 51) zu steuern, um die Datenverbindung mit dem zweiten Verstärker (26B) zu koppeln und die Sprachverbindung von dem zweiten Verstärker (26B) zu entkoppeln, wenn die geforderte Sendeleistung geringer als die Schwelle ist.

18. Gerät nach Anspruch 10, wobei die Sprachverbindung und die phasenverschobene Sprachverbindung mit Ausnahme der Phasenverschiebung identisch sind.

19. Gerät nach Anspruch 1, weiterhin aufweisend:

   eine Radiofrequenzantenne (32) für die drahtlose Schnittstelle, die dem beweglichen drahtlosen Kommunikationsgerät (10A, 10B, 10C, 10D, 10E) zugeordnet ist.

20. Gerät nach Anspruch 1, wobei:

   das Mittel (16, 16A, 17A, 24A, 26A) zum Übertragen einer Sprachverbindung eine Sprachverbindungssendeeinheit (16) umfasst, die angepasst ist, eine Sprachverbindung zum Übertragen über einen ersten Ausgangszweig (27A) zu erzeugen;
   das Mittel (18, 17B, 24B, 26B) zum Übertragen einer Datenverbindung eine Datenverbindungssendeeinheit (18) umfasst, die angepasst ist, eine Datenverbindung zum Übertragen über einen zweiten Ausgangszweig (27B) zu erzeugen; und
   das Mittel (34, 36, 38, 40, 42, 44, 47, 51) zum Übertragen der Sprachverbindung über beide, den ersten und den zweiten Ausgangszweig umfasst:

   einen Phasenschieber (38, 44, 47), der angepasst ist, eine phasenverschobene Version der Sprachverbindung zu erzeugen; und
   einen Schalter (34, 36, 38, 40, 42, 44, 47, 51), der angepasst ist, die Datenverbindung von dem zweiten Ausgangszweig (27B) zu entkoppeln und die phasenverschobene Version der Sprachverbindung mit dem zweiten Ausgangszweig (27B) zu koppeln, wenn die geforderte Sendeleistung für die Sprachverbindung die Schwelle übersteigt.

21. Gerät nach Anspruch 20, weiterhin aufweisend eine Leistungssteuereinheit (20), die angepasst ist, den Phasenschieber (38, 44, 47) und den Schalter (34, 36, 38, 40, 42, 44, 47, 51) auf der Basis geforderter Sendeleistung für die Sprachverbindung zu steuern.

22. Gerät nach Anspruch 21, wobei die Leistungssteuereinheit (20) angepasst ist, die Leistungssteuerdaten zu überwachen und den Phasenschieber (38, 44, 47) und den Schalter (34, 36, 38, 40, 42, 44, 47, 51) in Antwort auf die Leistungssteuerdaten zu steuern.

23. Gerät nach Anspruch 22, wobei die Leistungssteuereinheit (20) angepasst ist, um den Schalter (34, 36, 38, 40, 42, 44, 47, 51) zu steuern, um die Datenverbindung mit dem zweiten Verstärker (26B) zu verbinden und die Sprachverbindung von dem zweiten Verstärker (26B) zu entkoppeln, wenn die geforderte Sendeleistung geringer als die Schwelle ist.

24. Gerät nach Anspruch 20, wobei die Sprachverbindung und die phasenverschobene Sprachverbindung mit Ausnahme der Phasenverschiebung identisch sind.

25. Gerät nach Anspruch 20, wobei der Phasenschieber (38, 44, 47) angepasst ist, um die Sprachverbindung, um ungefähr 90° in der Phase zu verschieben.

26. Gerät nach Anspruch 1, wobei:

das Mittel zum Kombinieren eine Kopplerschaltung (28, 45) umfasst, die angepasst ist, den ersten und den zweiten Ausgangszweig zum Übertragen über die drahtlose Schnittstelle (32), die dem beweglichen drahtlosen Kommunikationsgerät (10A, 10B, 10C, 10D, 10E) zugeordnet ist, zu kombinieren, das Gerät weiterhin aufweisend:

eine Leistungssteuereinheit (20), die angepasst ist, das Übertragen der Sprachverbindung über den ersten und den zweiten Ausgangszweig (27A, 27B) anzuordnen, wenn geforderte Sendeleistung für die Sprachverbindung eine Schwelle übersteigt.

27. Gerät nach Anspruch 26, weiterhin umfassend einen Phasenschieber (38, 44, 47), der angepasst ist, die Sprachverbindung in der Phase zu verschieben, um eine phasenverschobene Sprachverbindung zu erzeugen, wobei die Leistungssteuereinheit (20) angepasst ist, das Übertragen der Sprachverbindung über den ersten Ausgangszweig (27A) und das Übertragen der phasenverschobenen Sprachverbindung über den zweiten Ausgangszweig (27B) anzuordnen.

28. Gerät nach Anspruch 27, wobei die Sprachverbindung und die phasenverschobene Sprachverbindung mit Ausnahme der Phasenverschiebung identisch sind.

29. Gerät nach Anspruch 27, wobei der Phasenschieber (38, 44, 47) angepasst ist, die Sprachverbindung um ungefähr 90° in der Phase zu verschieben.

30. Gerät nach Anspruch 27, wobei der Kopplerschaltkreis (28, 45) einen 90° Richtkoppler (28, 45) umfasst, der angepasst ist, um den ersten und den zweiten Ausgangszweig zu kombinieren.

31. Gerät nach Anspruch 26, wobei die Leistungssteuereinheit (20) angepasst ist, um Leistungssteuerdaten zu überwachen und die Sendeleistung der Sprachverbindung in Antwort auf die Leistungssteuerdaten zu erhöhen.

32. Gerät nach Anspruch 26, wobei die Leistungssteuereinheit (20) angepasst ist, die Übertragung der Sprachverbindung über beide, den ersten und den zweiten Ausgangszweig (27A, 27B), anzuordnen, durch Entkopplung der Datenverbindung von dem zweiten Ausgangszweig (27B) und Koppeln der Sprachverbindung mit dem zweiten Ausgangszweig (27B).

33. Gerät nach Anspruch 26, wobei die Leistungssteuereinheit (20) angepasst ist, um die Übertragung der Sprachverbindung über beide, den ersten und den zweiten Ausgangszweig (27A, 27B) anzuordnen, durch Anordnung digitaler Erzeugung einer zweiten Sprachverbindung, die identisch mit der ersten Sprachverbindung ist und Koppeln der zweiten Sprachverbindung mit dem zweiten Ausgangszweig (27B).

34. Gerät nach Anspruch 26, wobei die Leistungssteuereinheit (20) angepasst ist, um die Kopplung der Datenverbindung zu dem zweiten Ausgangszweig (27B) und Entkopplung der Sprachverbindung von dem zweiten Ausgangszweig (27B) anzuordnen, wenn die geforderte Sendeleistung geringer als die Schwelle ist.

35. Gerät nach Anspruch 26, weiterhin aufweisend:

einen ersten Leistungsverstärker (26A), der angepasst ist, die Sprachverbindung, die über den ersten Ausgangszweig gesendet wird, zu verstärken; und
einen zweiten Leistungsverstärker (26B), der angepasst ist, die Sprachverbindung, die über den zweiten Ausgang gesendet wird, zu verstärken,

wobei der Kopplerschaltkreis (28, 45) angepasst ist, die erste und die zweite verstärkte Sprachverbindung zu kombinieren.

36. Gerät nach Anspruch 35, weiterhin aufweisend:

einen ersten Basisband-nach-RF Prozessor (24A), der angepasst ist, die Sprachverbindung von einer Basisbandfrequenz in eine erste Trägerfrequenz umzusetzen; und
einen zweiten Basisband-nach-RF Prozessor (24B), der angepasst ist, die Datenverbindung von einer Basisbandfrequenz in eine zweite Trägerfrequenz umzusetzen.

**37.** Gerät nach Anspruch 36, wobei der Phasenschieber (38, 44, 47) mit dem ersten Ausgangszweig des ersten Basisband-nach-RF Prozessors (24A) verbunden ist.

**38.** Gerät nach Anspruch 1, wobei:

der erste Ausgangszweig (27A) angepasst ist, die Sprachverbindung bei einer ersten Sendeträgerfrequenz zu übertragen;

der zweite Ausgangszweig (27B) angepasst ist, die Datenverbindung bei einer zweiten Sendefrequenz zu übertragen; und

das Gerät (10A, 10B, 10C, 10D, 10E) weiterhin eine Leistungssteuereinheit (20) umfasst, die angepasst ist, eine Sendeleistung der Sprachverbindung in Antwort auf die Leistungssteuerdaten zu steuern, wobei die Leistungssteuereinheit angepasst ist die Datenverbindung fallen zu lassen und Übertragung der Sprachverbindung über beide, den ersten und den zweiten Ausgangszweig (27A, 27B), bei der ersten Sendeträgerfrequenz anzuordnen, wenn die Sendeleistung der Sprachverbindung eine Schwelle übersteigt.

**39.** Gerät nach Anspruch 38, weiterhin umfassend einen Phasenschieber (38, 44, 47), der angepasst ist, die Sprachverbindung in der Phase zu verschieben, um eine phasenverschobene Sprachverbindung zu erzeugen, wobei die Leistungssteuereinheit (20) angepasst ist, die Übertragung der Sprachverbindung über den ersten Ausgangszweig (27A) anzuordnen und die Übertragung der phasenverschobenen Sprachverbindung über den zweiten Ausgangszweig (27B) anzuordnen.

**40.** Gerät nach Anspruch 39, wobei der Phasenschieber (38, 44, 47) angepasst ist, die Sprachverbindung um ungefähr 90° in der Phase zu verschieben.

**41.** Gerät nach Anspruch 1, weiterhin aufweisend, Mittel (38, 44, 47), um die Sprachverbindung in der Phase zu verschieben, um eine phasenverschobene Sprachverbindung zu erzeugen, wobei das Mittel zum Übertragen der Sprachverbindung über beide, den ersten und den zweiten Ausgangszweig (27A, 27B) Mittel umfasst, zum Übertragen der Sprachverbindung über den ersten Ausgangszweig (27A) und Übertragen der phasenverschobenen Sprachverbindung über den zweiten Ausgangszweig (27B).

**42.** Gerät nach Anspruch 41, wobei die Sprachverbindung und die phasenverschobene Sprachverbindung mit Ausnahme der Phasenverschiebung identisch sind.

**43.** Gerät nach Anspruch 41, wobei das phasenverschiebende Mittel angepasst ist, um die Sprachverbindung um ungefähr 90° in der Phase zu verschieben.

**44.** Gerät nach Anspruch 43, weiterhin aufweisend einen 90° Richtkoppler (28, 45), zum Kombinieren des ersten und des zweiten Ausgangszweiges (27A, 27B).

**45.** Gerät nach Anspruch 1, wobei die Sprachverbindung eine erste Trägerfrequenz aufweist und die Datenverbindung eine zweite Trägerfrequenz aufweist, die von der ersten Trägerfrequenz verschieden ist.

**46.** Gerät nach Anspruch 1, wobei das Mittel zum Übertragen umfasst:

einen ersten Richtkoppler (47), der angepasst ist, die Sprachverbindung in den ersten Verstärker (26A) zu führen und eine phasenverschobene Version der Sprachverbindung zu erzeugen;

ein Schaltgerät (34, 51), das angepasst ist die phasenverschobene Version des Sprachsignals mit dem zweiten Verstärker (26B) zu verbinden und die Datenverbindung von dem zweiten Verstärker (26B) zu entkoppeln, wenn geforderte Sendeleistung für die Sprachverbindung eine Schwelle übersteigt; und

einen zweiten Richtkoppler (28), der angepasst ist, um den ersten und den zweiten Ausgangszweig (27A, 27B) zum Übertragen über eine drahtlose Schnittstelle (32) zu verbinden, die dem beweglichen drahtlosen Kommunikationsgerät (10E) zugeordnet ist.

**47.** Gerät nach Anspruch 46, wobei der erste Richtkoppler (47) einen 90° Richtkoppler umfasst und der zweite Richtkoppler (28) einen 90° Richtkoppler umfasst.

**48.** Gerät nach Anspruch 46, weiterhin aufweisend eine Leistungssteuereinheit (20), die angepasst ist, das Schaltgerät (34, 51) auf der Grundlage geforderter Sendeleistung für die Sprachverbindung zu steuern.

**49.** Gerät nach Anspruch 48, wobei die Leistungssteuereinheit (20) angepasst ist, die Leistungssteuerdaten zu überwachen und das Schaltgerät (34, 51) in Antwort auf die Leistungssteuerdaten zu steuern.

**50.** Gerät nach Anspruch 48, wobei die Leistungssteuereinheit (20) angepasst ist, das Schaltgerät (34, 51) zu steuern, um die Datenverbindung mit dem zweiten Verstärker (26B) zu koppeln, wenn die geforderte Sendeleistung geringer als die Schwelle ist.

**51.** Ein Verfahren aufweisend:

Übertragen einer Sprachverbindung über einen ersten Ausgangszweig (27A) und
Übertragen einer Datenverbindung über einen zweiten Ausgangszweig (27B), und
Kombinieren (64) des ersten und des zweiten Ausgangszweiges (27A, 27B), zum Übertragen über eine drahtlose Schnittstelle (32), die einem beweglichen drahtlosen Kommunikationsgerät (10A, 10B, 10C, 10D, 10E) zugeordnet ist; weiterhin **gekennzeichnet durch**
Übertragen (62) der Sprachverbindung über beide, den ersten und den zweiten Ausgangszweig (27A, 27B), wenn geforderte Sendeleistung für die Sprachverbindung eine Schwelle übersteigt.

**52.** Verfahren nach Anspruch 51, weiterhin aufweisend Phasenverschieben (78) der Sprachverbindung, um eine phasenverschobene Sprachverbindung zu erzeugen, wobei das Übertragen der Sprachverbindung über beide, den ersten und den zweiten Ausgangszweig (62), das Übertragen der Sprachverbindung über den ersten Ausgangszweig und das Übertragen der phasenverschobenen Sprachübertragung über den zweiten Ausgangszweig (80) umfasst.

**53.** Verfahren nach Anspruch 52, wobei die Sprachverbindung und die phasenverschobene Sprachverbindung mit Ausnahme der Phasenverschiebung identisch sind.

**54.** Verfahren nach Anspruch 52, wobei das Phasenverschieben der Sprachverbindung das Phasenverschieben der Sprachverbindung um ungefähr 90° umfasst.

**55.** Verfahren nach Anspruch 54, weiterhin aufweisend, Kombinieren des ersten und des zweiten Ausgangszweiges über einen 90° Richtkoppler (28, 45).

**56.** Verfahren nach Anspruch 51, weiterhin aufweisend:

Überwachen der Leistungssteuerdaten (56, 58, 72, 74); und das Erhöhen der Sendeleistung der Sprachverbindung (66, 84) in Antwort auf die Leistungssteuerdaten.

**57.** Verfahren nach Anspruch 51, wobei das Übertragen der Sprachverbindung über beide, den ersten und den zweiten Ausgangszweig, Entkoppeln der Sprachverbindung von dem zweiten Ausgangszweig (60, 76) und Koppeln der Sprachverbindung mit dem zweiten Ausgangszweig (62, 80) umfasst.

**58.** Verfahren nach Anspruch 51, wobei das Übertragen der Sprachverbindung über beide, den ersten und den zweiten Ausgangszweig, digitales Erzeugen einer zweiten Sprachverbindung, die identisch mit der ersten Sprachverbindung ist und Koppeln der zweiten Sprachverbindung mit dem zweiten Ausgangszweig, umfasst.

**59.** Verfahren nach Anspruch 51, weiterhin aufweisend Koppeln der Datenverbindung mit dem zweiten Ausgangszweig und Entkoppeln der Sprachverbindung von dem zweiten Ausgangszweig, wenn die geforderte Sendeleistung geringer als die Schwelle ist.

**60.** Verfahren nach Anspruch 51, weiterhin aufweisend:

Verstärken der Sprachverbindung, die über den ersten Ausgangszweig übertragen wird, mit einem ersten Leistungsverstärker; und
Verstärken der Sprachverbindung, die über den zweiten Ausgang übertragen wird, mit einem zweiten Leistungsverstärker;

wobei das Kombinieren des ersten und des zweiten Ausganges, Kombinieren der ersten und der zweiten verstärkten Sprachverbindung umfasst.

**61.** Verfahren nach Anspruch 60, weiterhin aufweisend:

Übertragen der Sprachverbindung mit einer ersten Trägerfrequenz; und
Übertragen der Datenverbindung mit einer zweiten Trägerfrequenz.

**62.** Verfahren nach Anspruch 51, weiterhin aufweisend:

Übertragen der Sprachverbindung mit einer ersten Sendeträgerfrequenz über den ersten Ausgangszweig (27A);
Übertragen der Datenverbindung mit einer zweiten Sendeträgerfrequenz über den zweiten Ausgangszweig (27B);
Steuern einer Sendeleistung der Sprachverbindung in Antwort auf Leistungssteuerdaten; und
Fallenlassen der Datenverbindung und Übertragen der Sprachverbindung über beide, den ersten und den zweiten Ausgangszweig (27A, 27B) bei der ersten Sendeträgerfrequenz, wenn die geforderte Sendeleistung der Sprachverbindung eine Schwelle übersteigt.

**63.** Verfahren nach Anspruch 62, weiterhin aufweisend Phasenverschieben der Sprachverbindung um eine phasenverschobene Sprachverbindung zu erzeugen, wobei das Übertragen der Sprachverbindung über beide, den ersten und den zweiten Ausgangszweig (27A, 27B), Übertragen der Sprachverbindung über den ersten Ausgangszweig (27A) und Übertragen der phasenverschobenen Sprachverbindung über den zweiten Ausgangszweig (27B) umfasst.

**64.** Verfahren nach Anspruch 62, wobei das Phasenverschieben der Sprachverbindung Phasenschieben der Sprachverbindung um ungefähr 90° umfasst.

## Revendications

**1.** Dispositif de communication mobile sans fil (10A, 10C, 10D, 10E) comprenant un moyen (16, 16A, 17A, 24A, 26A) de transmission d'un appel vocal par le biais d'une première branche de sortie (27A), un moyen (18, 17B, 24B, 26B) de transmission d'un appel de données par le biais d'une seconde branche de sortie (27B), et un moyen (28, 45) de combinaison des première et seconde branches de sortie pour une transmission sur une interface sans fil (30, 32) associée au dispositif de communication mobile sans fil (10A, 10B, 10C, 10D, 10E), le dispositif étant en outre **caractérisé par** :

un moyen (34, 36, 38, 40, 42, 44, 47, 51) de transmission de l'appel vocal par le biais des deux première et seconde branches de sortie (27A, 27B) lorsqu'une puissance de transmission requise pour l'appel vocal dépasse un seuil.

**2.** Dispositif selon la revendication 1, comprenant en outre :

un premier amplificateur (26A) adapté pour améliorer l'appel vocal pour une transmission sur la première branche de sortie (27A) ; et
un second amplificateur (26B) adapté pour amplifier l'appel de données pour une transmission sur la seconde branche de sortie (27B) ;

dans lequel le moyen de transmission de l'appel vocal par le biais des deux première et seconde branches de sortie comprend :

un déphaseur (38, 44, 47) adapté pour générer une version déphasée de l'appel vocal ; et
un commutateur (34, 36, 40, 42, 51) adapté pour découpler l'appel de données du second amplificateur et coupler la version déphasée de l'appel vocal au second amplificateur lorsqu'une puissance de transmission requise pour l'appel vocal dépasse le seuil.

**3.** Dispositif selon la revendication 2, dans lequel le moyen de combinaison comprend un circuit (28, 45) coupleur adapté pour combiner les première et seconde branches de sortie (27A, 27B) pour une transmission sur l'interface sans fil associée au dispositif de communication mobile sans fil.

**4.** Dispositif selon la revendication 3, dans lequel le circuit coupleur comporte un coupleur hybride 90 degrés (28, 45) adapté pour combiner les première et seconde branches de sortie.

**5.** Module amplificateur de puissance selon la revendication 2, comprenant en outre une unité de commande de puissance (20) adaptée pour commander le déphaseur (38, 44, 47) et le commutateur (34, 36, 40, 42, 51) sur la base d'une puissance de transmission requise pour l'appel vocal.

**6.** Dispositif selon la revendication 5, dans lequel l'unité de commande de puissance (20) est adaptée afin de surveiller des données de commande de puissance, et commander le déphaseur (38, 44, 47) et le commutateur (34, 36, 40, 42, 51) en réponse aux données de commande de puissance.

**7.** Dispositif selon la revendication 5, dans lequel l'unité de commande de puissance (20) est adaptée afin de commander le commutateur (34, 36, 40, 42, 51) pour coupler l'appel de données au second amplificateur (26B) et découpler l'appel vocal du second amplificateur (26B) lorsque la puissance de transmission requise est inférieure au seuil.

**8.** Dispositif selon la revendication 2, dans lequel l'appel vocal et l'appel vocal déphasé sont identiques à l'exception du déphasage.

**9.** Dispositif selon la revendication 2, dans lequel le déphaseur (38, 44, 47) est adapté afin de déphaser l'appel vocal d'approximativement 90 degrés.

**10.** Dispositif selon la revendication 1, comprenant en outre :

un premier amplificateur (26A) adapté pour amplifier l'appel vocal pour une transmission sur la première branche de sortie (27A) ; et
un second amplificateur (26B) adapté pour amplifier l'appel de données pour une transmission sur la seconde branche de sortie (27B) ;

dans lequel le moyen de combinaison comprend un circuit (28, 45) coupleur adapté pour combiner les première et seconde branches de sortie pour une transmission sur l'interface sans fil associée au dispositif de communication mobile sans fil, et
dans lequel le moyen de transmission de l'appel vocal par le biais des deux première et seconde branches de sortie comprend un moyen (34, 36, 40, 42, 51) de couplage d'une version déphasée de l'appel vocal au second amplificateur (26B) lorsqu'une puissance de transmission requise pour l'appel vocal dépasse un seuil.

**11.** Dispositif selon la revendication 10, dans lequel un circuit (28, 45) coupleur comporte un coupleur hybride 90 degrés qui est adapté pour combiner les première et seconde branches de sortie (27A, 27B).

**12.** Dispositif selon la revendication 10, dans lequel le moyen de couplage comporte un commutateur (34, 36, 40, 42, 51) adapté pour découpler l'appel de données du second amplificateur (26B) et coupler la version déphasée de l'appel vocal au second amplificateur (26B) lorsqu'une puissance de transmission requise pour l'appel vocal dépasse le seuil.

**13.** Dispositif selon la revendication 10, comprenant en outre un déphaseur (38, 44, 47) adapté afin de générer la version déphasée de l'appel vocal lorsqu'une puissance de transmission requise pour l'appel vocal dépasse le seuil.

**14.** Dispositif selon la revendication 13, dans lequel le déphaseur (38, 44, 47) est adapté afin de déphaser l'appel vocal d'approximativement 90 degrés.

**15.** Dispositif selon la revendication 10, comprenant en outre une unité de commande de puissance (20) adaptée pour commander le moyen de couplage (34, 36, 40, 42, 51) sur la base de la puissance de transmission requise pour l'appel vocal.

**16.** Dispositif selon la revendication 15, dans lequel l'unité de commande de puissance (20) est adaptée afin de surveiller des données de commande de puissance, et commander le moyen (34, 36, 40, 42, 51) de couplage en réponse aux données de commande de puissance.

**17.** Dispositif selon la revendication 10, dans lequel l'unité de commande de puissance (20) est adaptée afin de commander le moyen (34, 36, 40, 42, 51) de couplage pour coupler l'appel de données au second amplificateur (26B)

et découpler l'appel vocal du second amplificateur (26B) lorsque la puissance de transmission requise est inférieure au seuil.

18. Dispositif selon la revendication 10, dans lequel l'appel vocal et l'appel vocal déphasé sont identiques à l'exception du déphasage.

19. Dispositif selon la revendication 1, comprenant en outre :

une antenne à fréquences radioélectriques (32) pour l'interface sans fil associée au dispositif de communication mobile sans fil (10A, 10B, 10C, 10D, 10E).

20. Dispositif selon la revendication 1, dans lequel :

le moyen (16, 16A, 17A, 24A, 26A), de transmission d'un appel vocal comprend une unité de transmission (16) d'appel vocal adaptée pour générer un appel vocal pour une transmission par le biais d'une première branche de sortie (27A) ;
le moyen (18, 17B, 24B, 26B) de transmission d'un appel de données comprend une unité de transmission (18) d'appel de données adaptée pour générer un appel de données pour une transmission par le biais d'une seconde branche de sortie (27B) ; et
le moyen (34, 36, 38, 40, 42, 44, 47, 51) de transmission de l'appel vocal par le biais des deux première et seconde branches de sortie comprend:

un déphaseur (38, 44, 47) adapté pour générer une version déphasée de l'appel vocal ; et
un commutateur (34, 36, 38, 40, 42, 44, 47, 51) adapté pour découpler l'appel de données de la seconde branche de sortie (27B) et coupler la version déphasée de l'appel vocal à la seconde branche de sortie (27B) lorsqu'une puissance de transmission requise pour l'appel vocal dépasse le seuil.

21. Dispositif selon la revendication 20, comprenant en outre une unité de commande de puissance (20) adaptée pour commander le déphaseur (38, 44, 47) et le commutateur (34, 36, 38, 40, 42, 44, 47, 51) sur la base d'une puissance de transmission requise pour l'appel vocal.

22. Dispositif selon la revendication 21, dans lequel l'unité de commande de puissance (20) est adaptée afin de surveiller des données de commande de puissance et commander le déphaseur (38, 44, 47) et le commutateur (34, 36, 38, 40, 42, 44, 47, 51) en réponse aux données de commande de puissance.

23. Dispositif selon la revendication 22, dans lequel l'unité de commande de puissance (20) est adaptée afin de commander le commutateur (34, 36, 38, 40, 42, 44, 47, 51) pour coupler l'appel de données au second amplificateur (26B) et découpler l'appel vocal du second amplificateur (26B) lorsque la puissance de transmission requise est inférieure au seuil.

24. Dispositif selon la revendication 20, dans lequel l'appel vocal et l'appel vocal déphasé sont identiques à l'exception du déphasage.

25. Dispositif selon la revendication 20, dans lequel le déphaseur (38, 44, 47) est adapté afin de déphaser l'appel vocal d'approximativement 90 degrés.

26. Dispositif selon la revendication 1, dans lequel :

le moyen de combinaison comporte un circuit (28, 45) coupleur adapté pour combiner les première et seconde branches de sortie pour une transmission sur l'interface sans fil (32) associée au dispositif de communication mobile sans fil (10A, 10B, 10C, 10D, 10E), le dispositif comprenant en outre :

une unité de commande de puissance (20) adaptée pour acheminer une transmission de l'appel vocal par le biais des deux première et seconde branches de sortie (27A, 27B) lorsqu'une puissance de transmission requise pour l'appel vocal dépasse un seuil.

27. Dispositif selon la revendication 26, comprenant en outre un déphaseur (38, 44, 47) adapté pour déphaser l'appel vocal afin de produire un appel vocal déphasé, dans lequel l'unité de commande de puissance (20) est adaptée afin d'acheminer une transmission de l'appel vocal par le biais de la première branche de sortie (27A) et acheminer une transmission de l'appel vocal déphasé par le biais de la seconde branche de sortie (27B).

28. Dispositif selon la revendication 27, dans lequel l'appel vocal et l'appel vocal déphasé sont identiques à l'exception du déphasage.

29. Dispositif selon la revendication 27, dans lequel le déphaseur (38, 44, 47) est adapté afin de déphaser l'appel vocal d'approximativement 90 degrés.

30. Dispositif selon la revendication 27, dans lequel le circuit (28, 45) coupleur comporte un coupleur hybride 90 degrés (28, 45) adapté pour combiner les première et seconde branches de sortie.

31. Dispositif selon la revendication 26, dans lequel l'unité de commande de puissance (20) est adaptée afin de surveiller des données de commande de puissance, et augmenter la puissance de transmission de l'appel vocal en réponse aux données de commande de puissance.

32. Dispositif selon la revendication 26, dans lequel l'unité de commande de puissance (20) est adaptée afin d'acheminer une transmission de l'appel vocal par le biais des deux première et seconde branches de sortie (27A, 27B) en découplant l'appel de données de la seconde branche de sortie (27B) et en couplant l'appel vocal à la seconde branche de sortie (27B).

33. Dispositif selon la revendication 26, dans lequel l'unité de commande de puissance (20) est adaptée afin d'acheminer une transmission de l'appel vocal par le biais des deux première et seconde branches de sortie (27A, 27B) en acheminant une génération numérique d'un second appel vocal identique au premier appel vocal et en couplant le second appel vocal à la seconde branche de sortie (27B).

34. Dispositif selon la revendication 26, dans lequel l'unité de commande de puissance (20) est adaptée afin d'acheminer un couplage de l'appel de données vers la seconde branche de sortie (27B) et un découplage de l'appel vocal de la seconde branche de sortie (27B) lorsque la puissance de transmission requise est inférieure au seuil.

35. Dispositif selon la revendication 26, comprenant en outre :

un premier amplificateur de puissance (26A) adapté pour amplifier l'appel vocal transmis par le biais de la première branche de sortie ; et
un second amplificateur de puissance (26B) adapté pour amplifier l'appel vocal transmis par le biais de la seconde sortie,

dans lequel le circuit (28, 45) coupleur est adapté pour combiner les premier et second appels vocaux amplifiés.

36. Dispositif selon la revendication 35, comprenant en outre :

un premier dispositif de traitement de bande de base à fréquence radioélectrique (24A) adapté pour convertir l'appel vocal d'une fréquence de bande de base vers une première fréquence porteuse ; et
un second dispositif de traitement de bande de base à fréquence radioélectrique (24B) adapté pour convertir l'appel de données d'une fréquence de bande de base vers une seconde fréquence porteuse.

37. Dispositif selon la revendication 36, dans lequel le déphaseur (38, 44, 47) est couplé à la branche de sortie du premier dispositif de traitement de bande de base à fréquence radioélectrique (24A).

38. Dispositif selon la revendication 1, dans lequel :

la première branche de sortie (27A) est adaptée pour transmettre l'appel vocal au niveau d'une première fréquence porteuse de transmission ;
la seconde branche de sortie (27B) est adaptée pour transmettre l'appel de données au niveau d'une seconde fréquence de transmission ; et
le dispositif (10A, 10B, 10C, 10D, 10E) comprend en outre une unité de commande de puissance (20) adaptée pour commander une puissance de transmission de l'appel vocal en réponse à des données de commande de puissance, dans lequel l'unité de commande de puissance est adaptée afin d'abandonner l'appel de données et

acheminer une transmission de l'appel vocal par le biais des deux première et seconde branches de sortie (27A, 27B) au niveau de la première fréquence porteuse de transmission lorsque la puissance de transmission de l'appel vocal dépasse un seuil.

39. Dispositif selon la revendication 38, comprenant en outre un déphaseur (38, 44, 47) adapté pour déphaser l'appel vocal pour produire un appel vocal déphasé, dans lequel l'unité de commande de puissance (20) est adaptée pour acheminer une transmission de l'appel vocal par le biais de la première branche de sortie (27A) et acheminer une transmission de l'appel vocal déphasé par le biais de la seconde branche de sortie (27B).

40. Dispositif selon la revendication 39, dans lequel le déphaseur (38, 44, 47) est adapté pour déphaser l'appel vocal d'approximativement 90 degrés.

41. Dispositif selon la revendication 1, comprenant en outre un moyen (38, 44, 47) de déphasage de l'appel vocal pour produire un appel vocal déphasé, dans lequel le moyen de transmission de l'appel vocal par le biais des deux première et seconde branches de sortie (27A, 27B) comporte un moyen de transmission de l'appel vocal par le biais de la première branche de sortie (27A) et de transmission de l'appel vocal déphasé par le biais de la seconde branche de sortie (27B).

42. Dispositif selon la revendication 41, dans lequel l'appel vocal et l'appel vocal déphasé sont identiques à l'exception du déphasage.

43. Dispositif selon la revendication 41, dans lequel le moyen de déphasage est adapté pour déphaser l'appel vocal d'approximativement 90 degrés.

44. Dispositif selon la revendication 43, comprenant en outre un coupleur hybride 90 degrés (28, 45) destiné à combiner les première et seconde branches de sortie (27A, 27B).

45. Dispositif selon la revendication 1, dans lequel l'appel vocal a une première fréquence porteuse, et l'appel de données a une seconde fréquence porteuse différente de la première fréquence porteuse.

46. Dispositif selon la revendication 1, dans lequel le moyen de transmission comprend :

un premier coupleur hybride (47) adapté pour faire passer l'appel vocal au premier amplificateur (26A) et générer une version déphasée de l'appel vocal ;
un dispositif formant commutateur (34, 51) adapté pour coupler la version déphasée de l'appel vocal au second amplificateur (26B), et découpler l'appel de données du second amplificateur (26B) lorsqu'une puissance de transmission requise pour l'appel vocal dépasse un seuil ; et
un second coupler hybride (28) adapté pour combiner les première et seconde branches de sortie (27A, 27B) pour une transmission sur une interface sans fil (32) associée au dispositif de communication mobile sans fil (10E).

47. Dispositif selon la revendication 46, dans lequel le premier coupleur hybride (47) comporte un coupleur hybride 90 degrés, et le second coupleur hybride (28) comporte un coupleur hybride 90 degrés.

48. Dispositif selon la revendication 46, comprenant en outre une unité de commande de puissance (20) adaptée pour commander le dispositif formant commutateur (34, 51) sur la base d'une puissance de transmission requise pour l'appel vocal.

49. Dispositif selon la revendication 48, dans lequel l'unité de commande de puissance (20) est adaptée pour surveiller des données de commande de puissance, et commander le dispositif formant commutateur (34, 51) en réponse aux données de commande de puissance.

50. Dispositif selon la revendication 48, dans lequel l'unité dé commande de puissance (20) est adaptée pour commander le dispositif formant commutateur (34, 51) pour coupler l'appel de données au second amplificateur (26B) lorsque la puissance de transmission requise est inférieure au seuil.

51. Procédé comprenant les étapes consistant à :

transmettre un appel vocal par le biais d'une première branche de sortie (27A), et

transmettre un appel de données par le biais d'une seconde branche de sortie (27B), et

combiner (64) les première et seconde branches de sortie (27A, 27B) pour une transmission sur une interface sans fil (32) associée à un dispositif de communication mobile sans fil (10A, 10B, 10C, 10D, 10E) ; **caractérisé en outre par** l'étape consistant à :

transmettre (62) l'appel vocal par le biais des deux première et seconde branches de sortie (27A, 27B) lorsqu'une puissance de transmission requise pour l'appel vocal dépasse un seuil.

**52.** Procédé selon la revendication 51, comprenant en outre les étapes consistant à déphaser (78) l'appel vocal pour produire un appel vocal déphasé, dans lequel une transmission de l'appel vocal par le biais des deux première et seconde branches de sortie (62) comportent les étapes consistant à transmettre l'appel vocal par le biais de la première branche de sortie et transmettre l'appel vocal déphasé par le biais de la seconde branche de sortie (80).

**53.** Procédé selon la revendication 52, dans lequel l'appel vocal et l'appel vocal déphasé sont identiques à l'exception du déphasage.

**54.** Procédé selon la revendication 52, dans lequel l'étape consistant à déphaser l'appel vocal comporte l'étape consistant à déphaser l'appel vocal d'approximativement 90 degrés.

**55.** Procédé selon la revendication 54, comprenant en outre l'étape consistant à combiner les première et seconde branches de sortie par le biais d'un coupleur hybride 90 degrés (28, 45).

**56.** Procédé selon la revendication 51, comprenant en outre les étapes consistant à :

surveiller des données de commande de puissance (56, 58, 72, 74) ; et

augmenter la puissance de transmission de l'appel vocal (66, 84) en réponse aux données de commande de puissance.

**57.** Procédé selon la revendication 51, dans lequel l'étape consistant à transmettre l'appel vocal par le biais des deux première et seconde branches de sortie comporte l'étape consistant à découpler l'appel de données de la seconde branche de sortie (60, 76) et l'étape consistant à coupler l'appel vocal à la seconde branche de sortie (62, 80).

**58.** Procédé selon la revendication 51, dans lequel les étapes consistant à transmettre l'appel vocal par le biais des deux première et seconde branches de sortie comportent l'étape consistant à générer numériquement un second appel vocal identique au premier appel vocal et coupler le second appel vocal à la seconde branche de sortie.

**59.** Procédé selon la revendication 51, comprenant en outre les étapes consistant à coupler l'appel de données à la seconde branche de sortie et découpler l'appel vocal de la seconde branche de sortie lorsque la puissance de transmission requise est inférieure au seuil.

**60.** Procédé selon la revendication 51, comprenant en outre les étapes consistant à :

amplifier l'appel vocal transmis par le biais de la première branche de sortie avec un premier amplificateur de puissance ; et

amplifier l'appel vocal transmis par le biais de la seconde sortie avec un second amplificateur de puissance,

dans lequel l'étape consistant à combiner les première et seconde branches de sortie comporte l'étape consistant à combiner les premier et seconds appels vocaux amplifiés.

**61.** Procédé selon la revendication 60, comprenant en outre les étapes consistant à :

transmettre l'appel vocal au niveau d'une première fréquence porteuse ; et

transmettre l'appel de données au niveau d'une seconde fréquence porteuse.

**62.** Procédé selon la revendication 51, comprenant les étapes consistant à :

transmettre l'appel vocal au niveau d'une première fréquence porteuse de transmission par le biais de la première branche de sortie (27A) ;

transmettre l'appel de données au niveau d'une seconde fréquence porteuse de transmission par le biais de la seconde branche de sortie (27B) ;

commander une puissance de transmission de l'appel vocal en réponse à des données de commande de puissance ; et

abandonner l'appel de données et transmettre l'appel vocal par le biais des deux première et seconde branches de sortie (27A, 27B) au niveau de la première fréquence porteuse de transmission lorsque la puissance de transmission requise de l'appel vocal dépasse un seuil.

63. Procédé selon la revendication 62, comprenant en outre les étapes consistant à déphaser l'appel vocal pour produire un appel vocal déphasé, dans lequel la transmission de l'appel vocal par le biais des deux première et seconde branches de sortie (27A, 27B) comporte l'étape consistant à transmettre l'appel vocal par le biais de la première branche de sortie (27A) et l'étape consistant à transmettre l'appel vocal déphasé par le biais de la seconde branche de sortie (27B).

64. Procédé selon la revendication 62, dans lequel le déphasage de l'appel vocal comporte l'étape consistant à déphaser l'appel vocal d'approximativement 90 degrés.

FIG. 1

FIG. 2

10C

32

DUPLEXER  30

28

HYBRID
COUPLER

26A  POWER
AMPLIFIER

26B  POWER
AMPLIFIER

27A

24A  BASEBAND
TO RF
PROCESSOR

27B

BASEBAND
TO RF
PROCESSOR  24B

DAC
17A

42

DAC
17B

40

USER
INTERFACE

VOICE
TX
UNIT
16A

VOICE
TX
UNIT
16B

POWER
CONTROL
UNIT
20

DATA
TX
UNIT
20 18

MODEM
CONTROLLER
14

MODEM
12

FIG. 3

**32**

**DUPLEXER** 30

**POWER AMPLIFIER** 43

27A

**HYBRID COUPLER** 45

27B

24A **BASEBAND TO RF PROCESSOR**

**BASEBAND TO RF PROCESSOR** 24B

**DAC 17A**

**DAC 17B**

42

**PHASE SHIFTER 44**

40

22

**USER INTERFACE**

**VOICE TX UNIT 16**

**POWER CONTROL UNIT 20**

**DATA TX UNIT 18**

**MODEM CONTROLLER 14**

**MODEM 12**

10D

**FIG. 4**

FIG. 5

**FIG. 6**

56 ─ PROCESS POWER
CONTROL DATA

58 ─ POWER >
THRESHOLD?

66 ─ INCREASE
TRANSMIT POWER ← NO

YES

68 ─ TRANSMIT VOICE
OVER FIRST OUTPUT

60 ─ DROP DATA CALL

70 ─ TRANSMIT DATA
OVER SECOND OUTPUT

62 ─ TRANSMIT VOICE OVER
FIRST AND SECOND
OUTPUT BRANCHES

64 ─ COMBINE FIRST
AND SECOND OUTPUT
BRANCHES

FIG. 7

72
PROCESS POWER
CONTROL DATA

74
POWER >
THRESHOLD?

84
INCREASE
TRANSMIT POWER

NO

YES

76
SWITCH OUT DATA FROM
SECOND OUTPUT

86
TRANSMIT VOICE
OVER FIRST OUTPUT

78
PHASE SHIFT VOICE

88
TRANSMIT DATA
OVER SECOND OUTPUT

80
SWITCH IN
PHASE- SHIFTED VOICE
OVER SECOND OUTPUT

82
COMBINE FIRST
AND SECOND OUTPUTS

FIG. 8

**REFERENCES CITED IN THE DESCRIPTION**

**Patent documents cited in the description**

- EP 0692918 A2